# EUROPÄISCHE PATENTSCHRIFT

(11) **EP 1 851 516 B1**
(45) Veröffentlichungstag und Bekanntmachung des Hinweises auf die Patenterteilung: **08.11.2017**
(21) Anmeldenummer: 06708290.9
(22) Anmeldetag: 15.02.2006
(51) Int. Cl.: G01F 1/84, G01F 15/18

(54) **MESSAUFNEHMER VOM VIBRATIONSTYP**
VIBRATION-TYPE SENSOR
CAPTEUR DE MESURE DE TYPE A VIBRATIONS

(30) Priorität: 25.02.2005 EP 05004166
(43) Veröffentlichungstag der Anmeldung: 07.11.2007
(60) Teilanmeldung: 08000610.9
(73) Patentinhaber: Endress+Hauser Flowtec AG, 4153 Reinach (CH)
(72) Erfinder: BITTO, Ennio, CH-4147 Aesch (CH); LORENZ, Rainer, 79540 Lörrach (DE); DRAHM, Wolfgang, 85435 Erding (DE)
(74) Vertreter: Andres, Angelika Maria
(86) Internationale Anmeldenummer: PCT/EP2006/050964
(87) Internationale Veröffentlichungsnummer: WO 2006/089855

(56) Entgegenhaltungen:
- DE-A1- 10 003 784
- DE-A1- 19 936 008

## Beschreibung

Die Erfindung betrifft einen Messaufnehmer vom Vibrationstyp mit einem Verbund-System, das ein, insb. aus Metall bestehendes, erstes Bauteil und ein mit diesem verbundenes, insb. ebenfalls aus Metall bestehendes, zweites Bauteil aufweist.

In der industriellen Mess- und Automatisierungstechnik werden zum hochgenauen Erfassen von Prozess-Messgrössen in Leitungen, insb. Rohrleitungen, strömender Medien, insb. zum Erfassen strömungsdynamischer und/oder rheologischer Messgrössen, oftmals In-Line-Messgeräte mit einem Messaufnehmer vom Vibrationstyp verwendet, der wenigstens ein mit der mediumsführenden Rohrleitung kommunizierendes, im Betrieb vibrierendes Messrohr aufweist. Aufbau, Wirkungsweise sowie Anwendungsmöglichkeiten solcher Messaufnehmer vom Vibrationstyp sind u.a. in der US-A 41 27 028, der US-A 45 24 610, der US-A 47 68 384, der US-A 47 93 191, der US-A 48 23 614, der US-A 52 53 533, der US-A 56 10 342, der US-A 57 96 011, der US-A 57 05 754, der US-A 60 06 609, der US-A 60 47 457, der US-B 61 68 069, der US-B 63 14 820, der US-B 63 52 196, der US-B 63 74 478, der US-B 63 97 685, der US-B 64 50 042, der US-B 64 87 917, der US-B 65 16 674, der US-B 65 19 828, der US-B 65 23 421, der US-B 65 98 281, der US-B 66 66 098, der US-B 66 98 644, der US-B 67 11 958, der US-A 67 69 163, der US-B- 68 51 323, der WO-A 03/048693, WO-A 05/050144 oder der eigenen nicht vorveröffentlichten de utschen Anmeldung DE102004048765.0 ausführlich und detailliert beschrieben.

Messaufnehmer vom Vibrationstyp dienen bekanntlich dazu, im Zusammenspiel mit einer daran angeschlossenen Messgerät-Elektronik in dem momentan im wenigstens einen Messrohr geführten Medium mit der zu messenden Prozess-Messgrösse entsprechend korrespondierende Reaktionskräfte, wie z.B. mit einem Massendurchfluss korrespondierende Corioliskräfte, mit einer Dichte korrespondierende Trägheitskräfte oder mit einer Viskosität korrespondierende Reibungskräfte etc., zu erzeugen und von diesen abgeleitet ein mit der der Prozess-Messgrösse, beispielsweise dem jeweiligen Massedurchfluss, der jeweilige Viskosität und/oder der jeweilige Dichte des Mediums, entsprechend korrespondierendes Messsignal zu erzeugen. Das wenigstens eine Messrohr des Messaufnehmers ist dafür üblicherweise mediumsdicht, insb. druckdicht, und zumeist auch dauerhaft in den Verlauf der das Medium führenden Rohrleitung, z.B. mittels entsprechender Flanschanschlüsse, eingesetzt. Zum schwingfähigen Haltern des wenigstens eine Messrohrs ist ferner ein im Vergleich dazu zumeist sehr biegesteif ausgeführte, rohr- oder rahmenförmigen, Trägerelement, beispielsweise aus Stahl, vorgesehen, das ein- und auslassseitig an das jeweilige Messrohr mechanisch gekoppelt, beispielsweise direkt daran fixiert, ist. Das Trägerelement kann, wie bei derartigen Messaufnehmern üblich und auch dem oben genannten Stand der Technik ohne weiteres entnehmbar, mittels entsprechend von aussen angebrachten Abdeckungen, wie z.B. rohrabdeckenden Kappen oder seitlich angebrachten Blechen, zu einem den Messaufnehmer einhausenden Messaufnehmer-Gehäuse komplettiert oder auch selbst als Messaufnehmer-Gehäuse ausgebildet sein.

Zum Antreiben des wenigstens einen Messrohrs umfassen Messaufnehmer der beschriebenen Art weiters eine mit der jeweiligen Messgerät-Elektronik elektrisch verbundene Erregeranordnung mit einem auf das Messrohr mechanisch einwirkenden, insb. elektro-dynamischen oder elektro-magnetischen, Schwingungserreger. Im Betrieb wird die Erregeranordnung von der Messgerät-Elektronik mittels entsprechender Erregersignale in geeigneter Weise so angesteuert, dass das Messrohr zumindest temporär Vibrationen, insb. Biegeschwingungen und/oder Torsionsschwingungen, ausführt. Des weiteren ist eine Schwingungsmesssignale liefernden Sensoranordnung vorgesehen, die zumindest bei Verwendung des Messaufnehmers als Coriolis-Massendurchfluss-Messaufnehmer wenigstens zwei voneinander beabstandete, auf einlass-bzw. auslassseitige Vibrationen des Messrohrs reagierende Sensorelemente aufweist.

Neben der Möglichkeit des gleichzeitigen Messens mehrerer solcher Prozessgrössen, insb. des Massendurchflusses, der Dichte und/oder der Viskosität, mittels ein und desselben Messgeräts besteht ein weiterer wesentlicher Vorteil von In-Line-Messgeräten mit Messaufnehmern vom Vibrationstyp u.a. darin, dass sie innerhalb vorgegebener Betriebsgrenzen eine sehr hohe Messgenauigkeit bei vergleichsweise geringer Störempfindlichkeit aufweisen. Darüber hinaus kann ein solches Messgerät für praktisch jedes fliess- oder strömunsgfähige Medium verwendet und in einer Vielzahl verschiedenster Anwendungsbereiche der Mess- und Automatisierungstechnik eingesetzt werden.

Bei In-Line-Messgeräten der beschriebenen Art, die als Coriolis-Massendurchflussmesser eingesetzt werden, ermittelt die jeweilige Messgerät-Elektronik im Betrieb u.a. eine Phasendifferenz zwischen den beiden von den Sensorelementen gelieferten Schwingungsmesssignalen und gibt die Messgerät-Elektronik an ihrem Ausgang ein davon abgeleitetes Messwertsignal ab, das einen mit dem zeitlichen Verlauf des Massendurchflusses korrespondierenden Messwert darstellt. Soll, wie bei derartigen In-Line-Messgeräten üblich, auch die Dichte des Mediums gemessen werden, so ermittelt die Messgerät-Elektronik dafür anhand der Schwingungsmesssignale weiters eine momentane Schwingfrequenz der Messrohre. Ausserdem kann beispielsweise auch die Viskosität des Mediums anhand der zur Aufrechterhaltung von den Messrohr-Schwingungen erforderlichen Leistung, insb. einem entsprechenden Erregerstrom für die Erregeranordnung, gemessen werden.

Zum Betrieb des Messaufnehmers, insb. auch zur Weiterverarbeitung oder Auswertung des wenigstens einen Messsignals, ist dieser, wie bereits angedeutet, mit einer entsprechenden Messgerät-Elektronik elektrisch verbunden. In der industriellen Mess- und Automatisierungstechnik ist diese Messgerät-Elektronik zudem oftmals über ein angeschlossenes Datenübertragungs-System mit anderen Messgeräten und/ oder mit einem entfernten Zentralrechner verbunden, wohin sie die Messwertsignale, z.B. via digitalen Daten-Bus, sendet. Als Datenübertragungs-Systeme dienen hierbei oftmals, insb. serielle, Bus-Systeme, wie z.B. PROFIBUS-PA, FOUNDATION FIELDBUS sowie die entsprechenden Übertragungs-Protokolle. Mittels des Zentralrechner können die übertragenen Messwertsignale weiterverarbeitet und als entsprechende Messergebnisse z.B. auf Monitoren visualisiert und/oder in Steuersignale für entsprechende Stellglieder, wie z.B. Magnet-Ventile, Elektro-Motoren von Pumpen etc., umgewandelt werden. Zur Aufnahme der Messgerät-Elektronik umfassen solche In-Line-Messgeräte ferner ein Elektronik-Gehäuse, das, wie z.B. in der WO-A 00/36379 vorgeschlagen, vom Messaufnehmer entfernt angeordnet und mit diesem nur über eine flexible Leitung verbunden sein kann oder das, wie z.B. auch in der EP-A 1 296 128 oder der WO-A 02/099363 gezeigt, direkt am Messaufnehmer, insb. auf dem bereits erwähnten Messaufnehmer-Gehäuse, angeordnet ist.

Bei Messaufnehmern der beschriebenen Art haben sich im wesentlichen zwei Arten von Rohrformen am Markt etabliert, nämlich einerseits im wesentlichen gerade Messrohre und andererseits im wesentlichen in einer Rohrebene gebogene Messrohre, unter denen die im wesentlichen S-, U- oder V-förmigen die wohl am meisten verwendeten sind. Insbesondere bei dem Messen von Massedurchflüssen dienenden Coriolis-Massedurchfluss-Messaufnehmern werden bei beiden Arten von Rohrformen aus Symmetriegründen zumeist zwei im Ruhezustand im wesentlichen parallel zueinander verlaufende und zumeist auch parallel vom Medium durchströmte Messrohre verwendet. Hierzu kann exemplarisch auf die US-A 41 27 028, die US-A 47 68 384, die

US-A 47 93 191, die US-A 56 10 342, US-A 57 96 011 oder US-B 64 50 042 auf die verwiesen werden.

Neben Messaufnehmern mit einer solchen Doppel-Messrohranordnung sind aber auch Messaufnehmer mit einem einzigen geraden oder gebogenen Messrohr seit längerem am Markt erhältlich. Derartige Messaufnehmer vom Vibrationstyp mit einem einzigen Messrohr sind z. B. in der US-A 45 24 610, der US-A 48 23 614, der US-A 52 53 533, der US-A 60 06 609, der

US-A 60 47 457, der US-A 61 68 069 der US-B 63 14 820, der

US-B 63 97 685, der US-B 64 87 917, der US-B 65 16 674, der

US-B 66 66 098, der US-B 66 98 644, der US-B 67 11 958, der

WO-A 03/048693 oder der erwähnten eigenen Anmeldung DE10354373.2 beschrieben. Jeder der darin in der gezeigten Messaufnehmer umfasst u.a. ein ein Einlassende und ein Auslassende aufweisenden, zumindest zeitweise vibrierenden Messrohr, beispielsweise aus Stahl, Titan, Tantal oder Zirkonium oder entsprechenden Legierungen, zum Führen des zu messenden Mediums, wobei das Messrohr zum Hindurchströmenlassen des Mediums über ein in das Einlassende mündendes erstes Rohrsegment und über ein in das Auslassende mündendes zweites Rohrsegment mit einer angeschlossenen Rohrleitung kommuniziert und wobei das Messrohr im Betrieb mechanische Schwingungen um eine die beiden Rohrsegmente imaginär verbindende Schwingungsachse ausführt sowie mit einem zumeist sehr biegesteif ausgeführten, rohr- oder rahmenförmigen, Trägerelement, beispielsweise aus Stahl, zum schwingfähigen Haltern des Messrohrs, das mittels eines ersten Übergangstücks am ersten Rohrsegment und mittels eines zweiten Übergangstücks am zweiten Rohrsegment fixiert ist.

Für den vorbeschriebenen Fall, dass es sich bei dem verwendeten Messaufnehmer um einen solchen mit einem einzigen Messrohr handelt, sind im Messaufnehmer zudem ein, insb. schwingfähig im Messaufnehmer-Gehäuse aufgehängtes, am Messrohr fixierter Gegenschwinger vorgesehen, der abgesehen vom Haltern des Schwingungserregers und der Sensorelemente, dazu dient, das vibrierende Messrohr von der angeschlossenen Rohrleitung schwingungstechnisch zu entkoppeln. Der zumeist aus kostengünstigem Stahl gefertigte Gegenschwinger kann dabei z.B. als ein koaxial zum Messrohr angeordneter rohrförmiger Kompensationzylinder oder kastenförmiger Tragrahmen ausgeführt sein. Den referierten Merkmalsensembles der einzelnen vorbeschriebenen Messaufnehmer ist noch hinzuzufügen, dass ein gerades Messrohr bzw. gerade Messrohre zumeist aus reinem Titan, einer Titan-Legierung mit hohem Titangehalt, reinem Zirconium oder einer Zirconium-Legierung mit hohem Zirconiumgehalt bestehen, da sich gegenüber Messrohren aus rostfreiem Stahl, der bei geraden Messrohren an sich ebenfalls möglich ist, üblicherweise kürzere Baulängen ergeben, und dass ein gebogenes Messrohr bzw. gebogene Messrohre bevorzugt aus rostfreiem Stahl bestehen, obwohl Titan oder Zirconium bzw. deren Legierungen auch hier als Material der Messrohre möglich sind. Darüber hinaus ist aber beispielsweise auch die Verwendung von Tantal oder entsprechenden Tantal-Legierungen als Messrohr-Material üblich.

Wie sich aus den vorangehenden Ausführungen unschwer ableiten lässt, weist praktisch jeder der im vorgenannten Stand der Technik gezeigten Messaufnehmer wenigstens ein, insb. bi- oder polymetallisches, Verbund-System auf, das ein erstes Bauteil - beispielsweise das erste oder das zweite Endstück - und ein sich zumindest teilweise durch das erste Bauteil entlang einer gedachten Längsachse des Verbund-Systems erstreckendes zweites Bauteil - beispielsweise das Messrohr - umfasst, wobei üblicherweise das zweite Bauteil mit einer als Zylinderoberfläche ausgebildeten äusseren Oberfläche eine innere Oberfläche des ersten Bauteils flächig kontaktiert, die durch eine Innenwand einer sich innerhalb des ersten Bauteils erstreckenden Bohrung gebildet ist. Gleichermassen sind aber auch Messaufnehmer mit Doppel-Messrohranordnung, wie insb. auch in der US-A 56 10 342 beschrieben, üblicherweise aus mehreren solcher, insb. bi-metallischen, Verbund-Systemen aufgebaut. Neben dem durch Messrohr und Endstück gebildeten Verbund-System sind als weitere Beispiele für solche, insb. bi-metallische, Verbund-Systeme im besonderen auch die Verbindung von Messrohr und Flansch oder die Verbindung Flansch und Messaufnehmer-Gehäuse zu nennen, vgl. hierzu auch die US-B 61 68 069, die US-B 63 52 196, die US-B 66 98 644. Des weiteren kann solch ein Verbund-System auch dadurch gebildet sein, dass, wie auch in der US-A 60 47 457 beschrieben, zwischen den Endstücken am Messrohr zumindest ein kreisscheibenförmiger Metallkörper fixiert sein, der als ein Teil der Erregeranordnung dient bzw. mit dieser zusammenwirkt. Darüber hinaus können solche Metallkörper auch als Teil der Sensoranordnung oder als Koppler zwischen dem Messrohr und dem ggf. vorgesehenen Gegenschwinger dienen.

An die in der industriellen Mess- und Automatisierungstechnik verwendeten Messaufnehmer vom Vibrationstyp werden sehr hohe Anforderungen hinsichtlich der Messgenauigkeit gestellt, die üblicherweise im Bereich von etwa 0,1% des Messwerts und/oder 0,01 % vom Messendwert liegt. Dafür ist im besonderen eine sehr hohe Stabilität des Nullpunkts wie auch eine sehr hohe Robustheit der gelieferten Messsignale erforderlich, besonders auch bei sich im Betrieb erheblich ändernden Umgebungs-, Einspann- und/oder Betriebsbedingungen. Wie bereits in den erwähnten US-A 56 10 342, der US-A 60 47 457, der US-A 61 68 069, der US-B 65 19 828, der US-B 65 98 281, der US-A 66 98 644, der US-B 67 69 163, der WO-A 03/048693 oder den erwähnten eigenen Anmeldungen DE102004048765.0 oder DE10354373.2 eingehend diskutiert, wird dabei auch der mechanischen Festigkeit, insb. der Wechselfestigkeit, eine erhebliche Bedeutung beigemessen, mit der die einzelnen Bauteile der vorgenannten im Messaufnehmer gebildeten Verbund-Systeme aneinander fixiert sind. Bereits geringste Abweichung der Festigkeit der vorgenannten Verbundsysteme von der beim Kalibrieren vorgefundenen Situation können erhebliche, nicht mehr beherrschbare Schwankungen des Nullpunkts und/oder der Empfindlichkeit und somit praktisch unbrauchbare Messsignale zur Folge haben. Üblicherweise können solche auf Entfestigungserscheinungen in den Verbund-Systemen zurückzuführenden Nullpunktfehler lediglich durch Einbau eines neuen In-Line-Messgeräts behoben werden. Einen besonderen Einfluss auf die Stabilität des Nullpunkts und/oder die Verfügbarkeit des Messaufnehmers hat dabei, wie auch bereits in der US-A 56 10 342, der US-A 60 47 457, der US-B 61 68 069, der US-A 65 98 281, der US-B 66 34 241 oder auch der WO-A 03/048693 ausführlich diskutiert, die Art und Weise der Befestigung des Messrohrs innerhalb des äusseren Trägerelements und dem ggf. vorhanden Gegenschwinger.

Traditionell werden die Bauteile solcher Verbund-Systeme zumindest anteilig aneinander stoffschlüssig durch Löt- und/oder Schweissverbindungen fixiert. So ist beispielsweise bereits in der US-A 48 23 614 beschrieben, dass die jeweilige Ende des einen Messrohrs in eine jeweilige Bohrung eines einlassseitigen bzw. eines auslassseitigen Endstücks eingesteckt und darin durch stirnseitiges und rückseitiges Schweissen, Löten oder Hartlöten fixiert sind, vgl. die in einigen der Figuren zu sehenden Materialwülste. Die Endstücke sind ihrerseits im äusseren Trägerelement fixiert. Weiter Beispiele für solche Verbund-Systeme mit stoffschlüssigen Verbindungen sind u.a. auch in der US-B 61 68 069, der US-B 63 52 196, der US-B 65 19 828, der US-B 65 23 421, der US-B 65 98 281, der US-B 66 98 644 oder der US-B 67 69 163 gezeigt.

Insbesondere für den oben beschriebenen Fall, bei dem das erste Bauteil als Koppler zwischen dem als zweites Bauteil ausgebildeten Messrohr und einem als Gegenschwinger ausgebildeten dritten Bauteil dient, besteht insoweit bei der Herstellung des Messaufnehmers jedoch oftmals ein erhebliches Problem darin, dass, bedingt durch die Bauart und/oder durch seitens der Anwendung an den Messaufnehmer gestellte Anforderungen, wenigstens zwei Bauteile schwingungsfest miteinander zu verbinden sind, die aus voneinander verschieden Metallen, beispielsweise Stahl und Titan, bestehen. Bei bi-metallischen Verbund-Systemen, also bei solchen, bei denen wenigstens das erste Bauteil und das zweite Bauteil aus unterschiedlichen Metallen bestehen, lassen sich allfällige Entfestigungen des Verbundes unglücklicherweise nicht immer ohne weiteres sicher vermeiden. Wie beispielsweise der US-A 60 47 457, der US-B 61 68 069, der US-B 63 52 196, der US-B 65 98 281, der US-B 66 34 241, der US-B 65 23 421 oder der US-B 66 98 644 entnehmbar, können nämlich bei solchen bi-metallischen Verbund-Systemen Probleme hinsichtlich der Dauerfestigkeit der dann infolge mangelnder Verschweissbarkeit gezwungenermassen verwendeten Lotverbindungen auftreten, die sich u.a. auf unzureichende Benetzung und/oder in radialer Richtung wechselnde mechanische Beanspruchungen der Fügestellen zurückführen lassen. Letzteres ist besonders den teilweise erheblich voneinander abweichenden Wärmeausdehnungen der Bauteile, sei es bei der Fertigung oder im Betrieb, geschuldet. Als ein weiteres Problem solcher stoffschlüssigen Lötverbindungen sind in der US-B 65 19 828 oder der US-B 65 98 281 auch materialverschleissende S chwingungsreibungen im Bereich der Fügestellen genannt.

Eine Möglichkeit zur Reduzierung dieses Risikos des Entfestigens solcher, beispielsweise von einem Messrohr eines Coriolis-Massedurchfluss-Messaufnehmers und einem darauf aufgeschobenen und fixierten Metallkörper gebildeten Verbund-Systeme kann gemäss der US-B 66 98 644 nunmehr darin bestehen, dass seitens der Bauteile in die Lötverbindung zusätzlich Druckspannungen eingebracht werden, wodurch die zwischen den Bauteilen eher grossflächig ausgebildete Lötverbindung stabilisiert werden. Eine weitere Möglichkeit zur Verbesserung der Dauerfestigkeit solcher Verbund-Systeme besteht darin, die Bauteile unter Bildung eins Pressverbandes aneinander zu fixieren. So wurde in der bereits erwähnten US-A 56 10 342 wie auch der WO-A 03/048693 jeweils ein Fixier-Verfahren für Messrohre in Endstücken vorgeschlagen, bei dem jedes Ende des Messrohrs in eine entsprechende Bohrung eines einlassseitigen bzw. eines auslassseitigen Endstücks eingesteckt und mittels eines in das Ende eingebrachten Walz-Werkzeugs mit der Innenwand der Bohrung, insb. ohne Wärmezufuhr, verpresst werden, wodurch eine hochfeste Reibschlussverbindung zwischen dem ersten und dem zweiten Bauteil gebildet wird. Ein für dieses Verfahren entsprechend geeignetes Walz-Werkzeug ist beispielsweise auch in der US-A 40 90 382 im Rahmen eines Verfahrens zum Fertigen von Boilern oder Wärmetauschern beschrieben. Eine weitere Möglichkeit zur Herstellung solcher mittels hochfester Reibschlussverbindungen gebildeten Verbund-Systeme besteht, wie z.B. auch in der US-A 60 47 457 vorgeschlagen, darin, dass das erste Bauteil, nach dem es auf das zweite Bauteil aufgeschoben bzw. aufgesteckt worden ist, mittels eines Press-Werkzeuges von aussen zusammendrückt und dabei unterhalb einer Rekristallisationstemperatur der Bauteil-Materials, insb. bei Raumtemperatur, gemischt plastisch-elastisch verformt wird. Die dafür aufgewendeten Verformungskräfte sind dabei jeweils so ausgebildet, dass das zweite Bauteil im wesentlichen keine Querschnittsverjüngungen und/oder - verengungen erfährt, so dass ein initialer Innen-Durchmesser des zweiten Bauteils auch nach dem Herstellen des Verbund-Systems praktisch durchgängig unverändert erhalten bleibt. Eine für das Verpressen entsprechend geeignete Vorrichtung ist beispielsweise in der US-A 37 45 633 gezeigt. Alternativ zum plastisch-elastischen Verpressen kann ein solches mittels Reibschluss gebildetes Verbund-System beispielsweise auch dadurch hergestellt werden, dass das erste Bauteil, wie auch in der US-B 65 98 281 oder der US-B 65 19 828 gezeigt, auf das zweite Bauteil thermisch aufgeschrumpft oder unter Zwischenlage elastisch verformbarer Klemmelemente mit dem zweiten Bauteil verspannt wird.

Weiterführend ist in der US-B 65 98 281 oder der US-B 65 19 828 diskutiert worden, dass allerdings auch bei rein reibschlüssigen Pressverbindungen aufgrund von Schwingungsreibung ein allfälliges Entfestigen des Verbund-Systems nicht immer sicher vermieden werden kann. Überdies können solchen Schwingungsreibungen die Materialien des Verbund-Systems im Bereich der einander kontaktierenden Oberflächen korrodieren lassen. Des weiteren können, wie der WO-A 03/048693 entnehmbar, die üblicherweise unterschiedlichen Ausdehnungsverhalten der Bauteile der vorgenannten Verbund-Systeme, beispielsweise also die oben erwähnten Endstücke und der darin jeweils eingespannten Rohrsegmente des Meßrohrs, dazu führen, daß die durch das erste Bauteil auf das zweite Bauteil ausgeübten Einspannkräfte bei Temperaturschwankungen, insb. bei allfälligen Temperaturschocks wie sie z.B. bei turnusmäßig durchgeführten Reinigungsmaßnahmen mit extrem heißen Spül-Flüssigkeiten auftreten können, unter einen kritischen Wert sinken können. Dies wiederum kann bedeuten, daß das erste Bauteil und das zweite Bauteil aufgrund von thermisch bedingten Ausdehnungen stellenweise den durch das Walzen, Pressen oder Aufschrumpfen herbeigeführten mechanischen Kontakt verlieren und somit das Verbund-System in unzulässigem Maße entfestigt werden können. Infolgedessen können wiederum die Auszugsfestigkeit des Verbund-Systems sinken und insoweit auch mit derartigen Preßverbänden die geforderte hohe Nullpunktstabilität des Meßaufnehmers nicht ohne weiteres sichergestellt werden. Zur Behebung der durch Schwingungsreibung zwischen den Bauteilen verursachten Mängel in Verbund-System der beschriebenen Art wird in der US-B 65 98 281 bzw. der US-B 65 19 828 vorgeschlagen, die zugehörigen Bauteile nach dem Herstellen des Preßverbandes, insb. unter Verwendung eines als Zwischenlage dienenden Füllmaterials, zusätzlich miteinander stoffschlüssig zu verbinden, was allerdings ggf. die oben erwähnten, mit Lötverbindungen einhergehenden Probleme erneut aufwerfen kann. Demgegenüber wird in der WO-A 03/048693 ein Verbund-System vorgeschlagen, das eine erhöhte Verdreh-Festigkeit dadurch erfährt, daß eine in Richtung der Längsachse des Verbund-System verlaufende Nut in die Innenwand des ersten Bauteils eingeformt ist, die unter Bildung eines in einer Umfangrichtung wirkenden Formschluß ein Verdrehen des ersten Bauteils gegenüber dem zweiten Bauteil wirksam verhindern kann. Allerdings kann auch das hier vorgeschlagene Verbund-System eine Verringerung seiner nominellen Auszugsfestigkeit erfahren, sei es durch Schwingungsreibung und/oder durch thermisch bedingtes Dehnen.

Ausgehend von den vorbeschriebenen Nachteilen hinsichtlich der Dauerfestigkeit von solchen in Meßaufnehmern vom Vibrationstyp herkömmlicherweise verwendeten Verbund-Systemen, besteht eine Aufgabe der Erfindung darin, Meßaufnehmer vom Vibrationstyp dahingehend zu verbessern, daß auch Bauteile mit unterschiedlichen chemischen und/oder physikalischen Eigenschaften dauerhaft und schwingungsfest miteinander verbindbar sind und somit Meßaufnehmer vom Vibrationstyp, auch unter Verwendung von aus verschiedenen Metallen bestehenden Bauteile, mit hoher Dauerfestigkeit herstellbar sind. Ferner ist eine Aufgabe der Erfindung darin zu sehen, Verbund-Systeme der beschriebenen Art dahingehend zu verbessern, daß deren Bauteile miteinander dauerhaft und sicher stoffschlüssig, insb. mittels

Schweißverbindung, verbindbar sind, dies im besonderen auch für den Fall, daß das Verbund-System bi- oder multi- metallisch ausgebildet ist.

Zur Lösung der Aufgaben besteht die Erfindung in einem Meßaufnehmer vom Vibrationstyp, insb. Coriolis-Massendurchfluß-Meßaufnehmer, für ein dem Messen eines in einer Leitung strömenden Mediums dienendes Meßgerät, welcher Meßaufnehmer wenigstens ein mittels wenigstens eines, insb. aus Metall bestehenden, ersten Bauteils und mittels wenigstens eines, insb. aus Metall bestehenden, zweiten Bauteils gebildetes, insb. bi- oder polymetallisches, Verbund-System umfaßt. Beim erfindungsgemäßen Meßaufnehmer ist ferner wenigstens das erste Bauteil des Verbund-Systems als ein Composite-Formteil ausgebildet, das aus wenigstens zwei Materialien, insb. wenigstens zwei Metallen, besteht, die sich hinsichtlich wenigstens einer physikalischen und/oder chemischen Eigenschaft, insb. einer Materialdichte, einer Schmelztemperatur, eines Wärmeausdehnungskoeffizienten und/oder hinsichtlich des Elastizitätsmoduls etc., voneinander unterscheiden, wobei die wenigstens zwei Materialien des ersten Bauteils über eine im Inneren des ersten Bauteils zumindest abschnittsweise gebildeten Diffusionszone zumindest teilweise stoffschlüssig miteinander verbunden sind.

Nach einer ersten Ausgestaltung des Meßaufnehmers der Erfindung bildet jedes der wenigstens zwei voneinander verschiedenen Materialien des ersten Bauteils jeweils wenigstens 1%, insb. jeweils mehr als 10%, von dessen Volumen.

Nach einer zweiten Ausgestaltung des Meßaufnehmers der Erfindung ist das erste Bauteil schichtweise aus den wenigstens zwei voneinander verschiedenen Materialien aufgebaut ist, und weist jedes der zwei Materialien eine Schichtdicke von wenigstens 1 mm auf.

Nach einer dritten Ausgestaltung des Meßaufnehmers der Erfindung ist ein Porositätsgrad des Composite-Bauteils kleiner als 10%, insb. wesentlich kleiner als 5%, gewählt.

Nach einer vierten Ausgestaltung des Meßaufnehmers der Erfindung ist wenigstens eines der wenigstens zwei Materialien des ersten Bauteils hinsichtlich wenigstens einer physikalischen und/oder chemischen Eigenschaft im wesentlichen gleich mit einem Material des zweiten Bauteils.

Nach einer fünften Ausgestaltung des Meßaufnehmers der Erfindung ist wenigstens eines der Bauteile des Verbundsystems hülsenförmig ausgebildet.

Nach einer sechsten Ausgestaltung des Meßaufnehmers der Erfindung besteht wenigstens das erste Bauteil des Verbund-Systems zumindest teilweise aus gesintertem Material.

Nach einer siebenten Ausgestaltung des Meßaufnehmers der Erfindung ist wenigstens das erste Bauteil zumindest teilweise mittels Heißpressens, insb. durchgeführt bei einem hohen Arbeitsdruck von über 800 bar und/oder einer hohen Arbeitstemperatur von über 700°C, hergestellt.

Nach einer achten Ausgestaltung des Messaufnehmers der Erfindung ist das erste Bauteil mittels isostatischen Heisspressens hergestellt.

Nach einer neunten Ausgestaltung des Messaufnehmers der Erfindung besteht wenigstens das erste Bauteil teilweise aus einem gegossenen und/oder gewalzten und/ oder einem gezogenen Material.

Nach einer zehnten Ausgestaltung des Messaufnehmers der Erfindung besteht wenigstens eines der Bauteile zumindest teilweise aus wenigstens einem Metall besteht.

Nach einer elften Ausgestaltung des Messaufnehmers der Erfindung bestehen sowohl das erste Bauteil als auch das das zweite Bauteil jeweils zumindest teilweise aus Metall.

Nach einer zwölften Ausgestaltung des Messaufnehmers der Erfindung besteht wenigstens eines der Bauteile zumindest teilweise aus Stahl, insb. Edelstahl,.

Nach einer dreizehnten Ausgestaltung des Messaufnehmers der Erfindung besteht wenigstens eines der Bauteile zumindest teilweise aus Titan, insb. einer Titan-Legierung.

Nach einer vierzehnten Ausgestaltung des Messaufnehmers der Erfindung besteht wenigstens eines der Bauteile zumindest teilweise aus Tantal, insb. einer Tantal-Legierung.

Nach einer fünfzehnten Ausgestaltung des Messaufnehmers der Erfindung besteht wenigstens eines der Bauteile zumindest teilweise aus Zirkonium, insb. einer Zirkonium-Legierung.

Nach einer sechzehnten Ausgestaltung des Messaufnehmers der Erfindung handelt es sich bei jedem der wenigstens zwei Materialien des ersten Bauteils um ein Metall.

Nach einer siebzehnten Ausgestaltung des Messaufnehmers der Erfindung besteht das erste Bauteil zumindest teilweise aus Stahl und zumindest teilweise aus Titan und/ oder Zirkonium und/oder Tantal.

Nach einer achtzehnten Ausgestaltung des Messaufnehmers der Erfindung sind die wenigstens zwei Bauteile des Verbundsystems zumindest abschnittsweise, insb. mittels Löt- und/oder Schweissverbindung, miteinander stoffschlüssig verbunden. Nach einer Weiterbildung dieser Ausgestaltung der Erfindung sind die wenigstens zwei Bauteile des Verbundsystems zumindest abschnittsweise mittels Löt- und/oder Schweissverbindung miteinander verbunden. Nach einer anderen Weiterbildung dieser Ausgestaltung der Erfindung sind die wenigstens zwei Bauteile des Verbundsystems zumindest abschnittsweise über eine Diffusionszone miteinander verbunden.

Nach einer neunzehnten Ausgestaltung des Messaufnehmers der Erfindung ist das erste Bauteil unter Bildung der Diffusionszone direkt auf das zweite Bauteil aufgesintert.

Nach einer zwanzigsten Ausgestaltung des Meßaufnehmers der Erfindung sind die wenigstens zwei Bauteile des Verbundsystems zumindest abschnittsweise, insb. mittels eines Kunststoffes, miteinander adhäsiv verbunden.

Nach einer einundzwanzigsten Ausgestaltung des Meßaufnehmers der Erfindung erstreckt sich eines der wenigstens zwei Bauteile des Verbundsystems zumindest teilweise durch das andere Bauteil entlang einer gedachten Längsachse des Verbund-Systems.

Nach einer zweiundzwanzigsten Ausgestaltung des Meßaufnehmers der Erfindung umgreift eines der wenigstens zwei Bauteile des Verbund-Systems das andere der wenigstens zwei Bauteile zumindest abschnittsweise zumindest teilweise.

Nach einer dreiundzwanzigsten Ausgestaltung des Meßaufnehmers der Erfindung kontaktiert eines der wenigstens zwei Bauteile des Verbund-Systems mit einer zumindest teilweise gewölbten, insb. als Zylinderoberfläche ausgebildeten, äußeren Oberfläche eine innere Oberfläche des anderen der wenigstens zwei Bauteile des Verbund-Systems Bauteils zumindest abschnittsweise flächig. Nach einer Weiterbildung dieser Ausgestaltung der Erfindung ist die innere Oberfläche durch eine Innenwand einer sich zumindest in einen Teilbereich des jeweiligen Bauteils erstreckenden Bohrung gebildet. Nach einer anderen Weiterbildung dieser Ausgestaltung der Efindung bilden die wenigstens zwei Bauteile des Verbundsystems zumindest anteilig einen, insb. in Richtung der Längsachse und/oder in einer Umfangsrichtung der äußeren Oberfläche des zweiten Bauteils wirkenden, Preßverband. Dabei wirken auf durch die einander kontaktierenden Oberflächen der beiden Bauteile des Verbundsystems gebildete Wirkflächen des Verbund-Systems Einspannkräfte, insb. radial zur Längsachse ausgerichtete Normalkräfte, so ein, daß wenigstens eines der beiden Bauteile des Verbundsystems zumindest anteilig dauerhaft elastisch, insb. gemischt elastisch-plastisch, verformt ist.

Nach einer vierundzwanzigsten Ausgestaltung des Meßaufnehmers der Erfindung ist wenigstens eines der Bauteile des Verbund-System zumindest teilweise dauerhaft elastischen, insb. gemischt plastisch-elastischen, Verformungen unterworfen.

Nach einer fünfundzwanzigsten Ausgestaltung des Meßaufnehmers der Erfindung ist wenigstens eines der Bauteile des Verbundsystems ringförmig ausgebildet.

Nach einer sechsundzwanzigsten Ausgestaltung des Meßaufnehmers der Erfindung ist wenigstens eines der Bauteile des Verbundsystems rohrförmig ausgebildet. Nach einer Weiterbildung dieser Ausgestaltung der Erfindung ist das wenigstens eine rohrförmig Bauteil als ein zumindest abschnittsweise gerades, kreiszylindrisches Rohr ausgebildet.

Nach einer siebenundzwanzigsten Ausgestaltung des Meßaufnehmers der Erfindung ist eines der Bauteile des Verbund-Systems als ein dem Führen des zu messenden Mediums dienendes, im Betrieb des Meßaufnehmers vibrierendes, insb. zumindest zeitweise Biegeschwingungen um eine in Richtung der Längsachse des Verbund-Systems verlaufende und/oder mit der Längsachse des Verbund-Systems koinzidierende Schwingungsachse ausführendes, Meßohr des Meßaufnehmers ausgebildet. Nach einer Weiterbildung dieser Ausgestaltung der Erfindung ist das erste Bauteil als Meßrohr ausgebildet und ist das zweite Bauteil als ein auf dem Meßrohr fixierter, insb. plattenförmiger oder scheibenförmiger, Metallkörper ausgebildet. Nach einer anderen Weiterbildung dieser Ausgestaltung der Erfindung ist das zweite Bauteil als Meßrohr ausgebildet und ist das erste Bauteil als ein auf dem Meßrohr fixierter, insb. plattenförmiger oder scheibenförmiger, Metallkörper ausgebildet.

Nach einer Weiterbildung des Meßaufnehmers der Erfindung umfaßt das Verbund-System weiters ein drittes Bauteil, das am ersten Bauteil und/oder am zweiten Bauteil fixiert ist. Nach einer ersten Ausgestaltung dieser Weiterbildung der Erfindung ist das erste Bauteil sowohl mit dem zweiten Bauteil als auch mit dem dritten Bauteil jeweils zumindest abschnittsweise stoffschlüssig verbunden. Nach einer zweiten Ausgestaltung dieser Weiterbildung der Erfindung besteht das dritte Bauteil aus einem Material, das sich hinsichtlich wenigstens einer physikalischen und/oder chemischen Eigenschaft, insb. einer Schmelztemperatur, eines Wärmeausdehnungskoeffizienten und/oder hinsichtlich des Elastizitätsmoduls etc., von einem Material des zweiten Bauteils unterscheidet. Nach einer dritten Ausgestaltung dieser Weiterbildung der Erfindung ist das dritte Bauteil vom ersten Bauteil beabstandet angeordnet und/oder zum ersten Bauteil im wesentlichen identisch ausgebildet. Nach einer vierten Ausgestaltung dieser Weiterbildung der Erfindung ist das erste oder das zweite Bauteil des Verbund-Systems als ein dem Führen des zu messenden Mediums dienendes, im Betrieb des Meßaufnehmers vibrierendes, insb. zumindest zeitweise Biegeschwingungen um eine in Richtung der Längsachse des Verbund-Systems verlaufende und/oder mit der Längsachse des Verbund-Systems koinzidierende Schwingungsachse ausführendes, Meßohr des Meßaufnehmers ausgebildet und ist das dritte Bauteil als ein schwingfähig am des Meßrohr fixiertes und/oder das Meßrohr schwingfähig halterndes Trägerelement des Meßaufnehmers ausgebildet. Nach einer fünften Ausgestaltung dieser Weiterbildung der Erfindung ist das dritte Bauteil als ein das Meßrohr umhüllendes Aufnehmer-Gehäuse des Meßaufnehmers ausgebildet. Nach einer sechsten Ausgestaltung dieser Weiterbildung der Erfindung ist das dritte Bauteil als ein das Meßrohr umhüllender, insb. zylindrischer und im wesentlichen koaxial zum Meßrohr ausgerichteter, Gegenschwinger des Meßaufnehmers ausgebildet. Nach einer siebenten Ausgestaltung dieser Weiterbildung der Erfindung ist wenigstens eines der drei Bauteile des Verbund-Systems als ein an einem Ende des Meßrohrs fixierter, dem Anschließen einer als Rohrleitung ausgebildeten Leitung an das Meßrohr dienender Flansch des Meßaufnehmers ausgebildet.

Ein Grundgedanke der Erfindung besteht darin, eines der Bauteile von Verbund-Systemen der beschriebenen Art als, insb. gesintertes, Composite-Formteil auszubilden. Dadurch wird es ermöglicht, dessen mit andern Bauteilen in Kontakt kommende Oberflächen jeweils in ihren physikalischen und/oder chemischen Eigenschaften auf einfache Weise möglichst gut an die physikalischen und/oder chemischen Eigenschaften des jeweils kontaktieren andern Bauteils anzupassen, so daß die Bauteile bei der Herstellung des Meßaufnehmers ohne weiteres auch mittels Schweißverbindungen stoffschlüssig miteinander verbindbar sind. Überdies kann die geforderte hohe Qualität der Verbund-System, sei es hinsichtlich der Materialeigenschaften der verwendeten Bauteile oder hinsichtlich der mechanischen Festigkeit, nicht nur erhöht, sondern auch weitaus zuverlässiger reproduziert werden.

Als ein weiterer Vorteil gegenüber herkömmlichen Meßaufnehmern mit solchen Verbund-Systemen, die anteilig oder gänzlich mittels Stoffschluß gebildet sind, kann zudem die erhebliche Vereinfachung der Fertigung und auch die Senkung der Fertigungskosten angesehen werden. Beispielsweise kann das wenigstens eine zumindest teilweise Composite-Bauteil in-situ, also zumindest in der endgültigen Position und Lage, direkt auf dem anderen Bauteil aufgesintert und mit diesem über die zwischen den Materialien beider Bauteile gebildet Diffusionszone stoffschlüssig verbunden werden.

Ein weiterer Vorteil der Erfindung besteht ferner darin, daß sich das Verbund-System besonders auch für das Verbinden eines massiven und vergleichsweise starren Bauteils, wie z.B. einem als Endstück oder als Koppler dienenden Metallkörper, mit einem im Vergleich dazu leicht deformierbaren, relativ dünnwandigen Bauteil, wie dem Meßrohr, eignet. Infolge auch dessen können die Auszugsfestigkeiten des erfindungsgemäßem Verbund-Systems auch nach mehrfacher Schwingungsbelastung ohne weiteres oberhalb von 50% der anfänglich vorhanden, vergleichsweise hohen Anfangsauszugsfestigkeiten und somit auch für eine hohe Betriebsdauer ohne weiteres oberhalb der für Meßaufnehmer der beschriebenen Art geforderten Mindestfestigkeiten gehalten werden.

Die Erfindung sowie vorteilhafte Ausgestaltungen werden nun anhand von Figuren der Zeichnung näher erläutert, wobei
Fig. 1 in einer perspektivischen Seitenansicht ein In-Line-Meßgerät zeigt,
Fig. 2 im Schnitt eine Längsansicht eines für die Verwendung in einem In-Line-Meßgerät gemäß Fig. 1 geeigneten, insb. als Coriolis-Masse-durchflussaufnehmer ausgebildten, Messaufnehmers vom Vibrationstyp mit wenigstens zwei zu einem Verbund-System vereinigten Bauteilen zeigt,
Fig. 3 perspektivisch und teilweise im Schnitt eine Längsansicht eines weiteren, aus Verbund-Systemen der beschriebenen Art aufgebauten Messaufnehmers vom Vibrationstyp zeigt,
Fig. 4 perspektivisch einen als erstes Bauteil des Verbund-Systems von Fig. 2 dienenden, auf einem nur teilweise dargestellten, kreiszylindrischen Messrohr eines Messaufnehmers vom Vibrationstyp fixierten kreisscheibenförmigen Metallkörper, der als zweites Bauteil des Verbund-Systems von Fig. 2 dient, zeigt,
Fig. 5 im Schnitt eine Längsansicht eines zur Bildung des Verbund-Systems der beschriebenen Art geeigneten, aus wenigstens zwei Materialien bestehenden Composite-Bauteils zeigt,
Fig. 6 schematisiert Varianten und Alternativen zur Herstellung eines Composite-Bauteils der beschreibenen Art zeigt und
Fig. 7 schematisiert einzelne Verfahrensschritte zur Herstellung eines gesinterten Composite-Bauteils der beschriebenen Art zeigt.

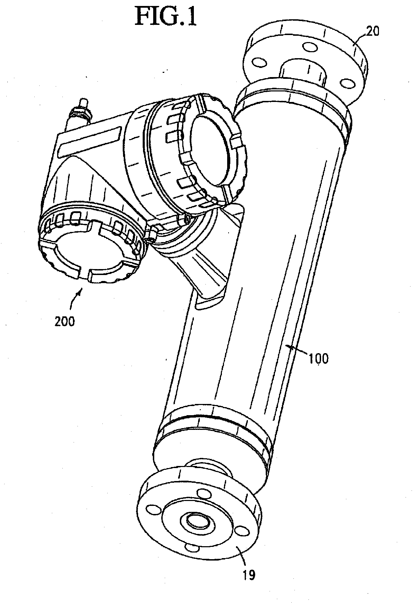

In Fig. 1 ist ein In-Line-Messgerät, beispielsweise ein Coriolis-Massedurchfluss-Messgerät, ein Dichte-Messgerät, ein Viskositäts-Messgerät oder dergleichen, mit einem Messaufnehmer vom Vibrationstyp schematisch dargestellt, das dazu dient, wenigstens eine strömungsdynamische und/oder eine rheologische Messgrösse eines in einer Leitung geführten Mediums zu messen. Das In-Line-Messgerät umfasst einen in einem Aufnehmer-Gehäuse untergebrachten, dem Erfassen der Messgrösse dienenden Messaufnehmer 100 sowie eine in einem Elektronik-Gehäuse untergebrachte, u.a. dem Steuern des Messaufnehmer und dem Verarbeiten von dessen Messsignalen dienende Messgerät-Elektronik 200.

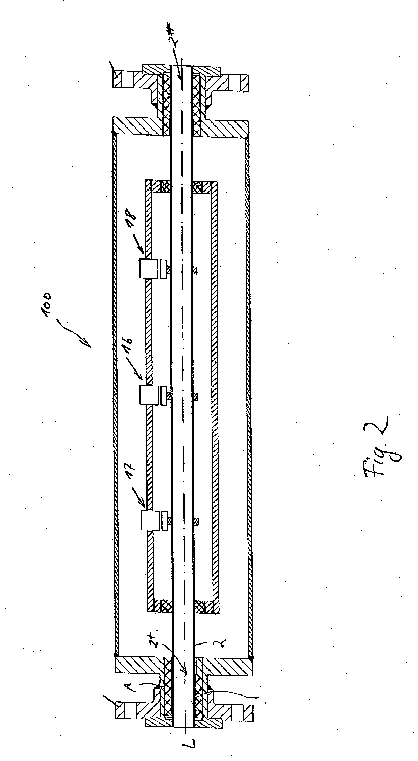

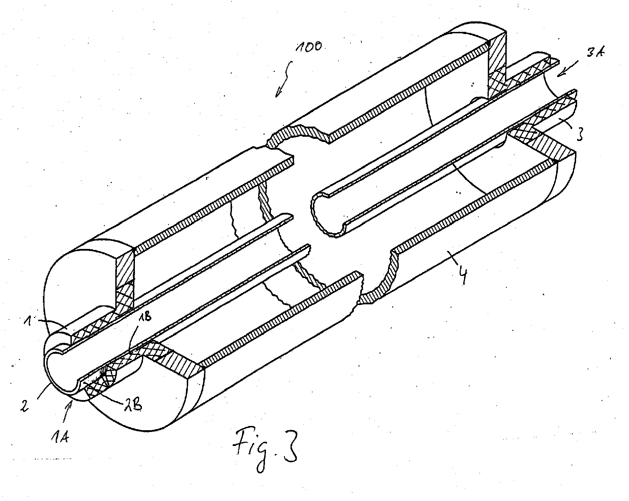

In den Fig. 2 bzw. 3 ist ferner ein Ausführungsbeispiel für einen entsprechenden, beispielsweise als Coriolis-Massendurchfluss- und/oder Dichte- und/oder Viskositäts-Messaufnehmer dienenden, Messaufnehmer 100 vom Vibrationstyp gezeigt, der für die Verwendung in einem solchen, dem Messen eines zumindest zeitweise strömenden Mediums dienenden In-Line-Messgerät vorgesehen ist. Das In-Line-Messgerät ist im Benutzungsfall mittels des Messaufnehmers 100 in den Verlauf einer von einem zu messenden Fluid durchströmten - aus Übersichtlichkeitsgründen hier nicht dargestellten - Rohrleitung eingefügt, so dass der Messaufnehmer 100 im Messbetrieb zumindest zeitweise vom zu messenden Medium durchströmt ist. Allerdings sind von besagtem Messaufnehmer hier lediglich die für die Erläuterung der Erfindung wesentlichen konstruktiven Einzelheiten gezeigt; die restlichen und zur vollen Funktion des Messaufnehmers oder des In-Line-Messgeräts ebenfalls erforderlichen Komponenten sind aus Übersichtlichkeitsgründen nicht dargestellt. Dies auch deshalb, weil der Aufbau, die Funktionsweise wie auch die Anwendungsgebiete für solche Messaufnehmer bzw. In-Line-Messgeräte dem Fachmann an und für sich bekannt sind; insoweit wird hierzu auf die eingangs bereits erwähnten Dokumente des Standes der Technik verwiesen.

Der erfindungsgemässe Messaufnehmer 100 umfasst wenigstens ein, insb. bi-oder polymetallisches, Verbund-System, das aus wenigstens einem ersten Bauteil 1 und einem zweiten Bauteil 2 des Messaufnehmers gebildet ist. Nach einer Ausgestaltung der Erfindung sind die wenigstens zwei Bauteile des Verbund-Systems so ausgebildet und aneinander fixiert, dass sich ein inneres der beiden Bauteile zumindest teilweise durch das andere, äussere Bauteil entlang einer gedachten Längsachse L des Verbund-Systems erstreckt. Das innere Bauteil weist dabei eine zumindest teilweise gewölbte, insb. als Zylinderoberfläche ausgebildete, äussere Oberfläche auf, die eine innere Oberfläche des äusseren Bauteils 1 flächig so kontaktiert, dass das äussere Bauteil das innere Bauteil zumindest abschnittsweise zumindest teilweise umgreift. Beispielsweise kann dabei die innere Oberfläche des äussere ersten Bauteils durch eine Innenwand einer sich zumindest in einen Teilbereich des äusseren Bauteils erstreckenden Bohrung gebildet sein, während die äussere Oberfläche des inneren zweiten Bauteils durch eine Aussenwand des zweiten Bauteils gebildet ist.

Im vorliegenden Ausführungsbeispiel ist das Verbund-System durch ein praktisch als inneres Bauteil 2 des Verbund-Systems fungierendes Messrohr des Messaufnehmers 100 sowie einer an diesem fixierten weiteren Komponente des Messaufnehmers 100 gebildet, beispielsweise einen auf das Messrohr oder eine von dessen endseitigen Verlängerungen aufgeschobenen und daran fixierten Metallkörper der eingangs erwähnten Art. Das Messrohr ist, wie bereits angedeutet, dafür vorgesehen, in den Verlauf einer von einem zu messenden Medium, z. B. von einer Flüssigkeit oder von einem Gas, durchflossene Rohrleitung eingesetzt und mit dieser fluid-leitend so verbunden zu werden, dass das zu messende Fluid im Betrieb des entsprechenden Messaufnehmers auch durch das Messrohr fliessen kann. Zu diesem Zweck sind entsprechende Flansche 19, 20 vorgesehen, die über ein jeweiliges kurzes Rohrstück mit dem Messrohr oder dieses jeweils endseitig verlängernde Endstücke verbunden sind, in das ein Einlassende 2⁺ und ein Auslassende 2# des hier gezeigten einzigen Messrohrs jeweils mündet. Anstatt über die Flansche kann der Messaufnehmer auch mittels anderer üblicher Befestigungsmittel, beispielsweise mittels sogenannter TriClamp®-Anschlüsse oder auch mittels Verschraubungen, an die Rohrleitung angeschlossen werden. Bei dem gezeigten Ausführungsbeispiel wird also die als erste Wirkfläche 1B des Verbund-Systems dienende innere Oberfläche des ersten Bauteils 1 durch eine Innenwand der sich hier durchgehend durch das erste Endstück hindurch erstreckende Bohrung 1A gebildet, während die als zweite Wirkfläche 2B des Verbund-Systems dienende äussere Oberfläche 2B des zweiten Bauteils 2 durch eine Aussenwand des Messrohrs gebildet ist.

Wie bei derartigen Messaufnehmern durchaus üblich, ist gemäss einer Ausgestaltung der Erfindung vorgesehen, dass wenigstens eines der beiden Bauteile 1, 2, insb. das Messrohr, zumindest teilweise aus wenigstens einem Metall besteht oder dass das erste Bauteil und das zweite Bauteil jeweils zumindest teilweise aus Metall bestehen. Als Material für das wenigstens eine metallische Bauteil kann beispielsweise Stahl, insb. Edelstahl, Titan, Tantal sowie Zirkonium oder auch eine aus wenigstens einem der vorgenannten hoch-korrosionsbeständigen Metalle bestehende Metall-Legierung dienen.

Zum Erzeugen von mit einer physikalischen Messgrösse, z.B. einem Massedurchfluss, einer Dichte und/oder einer Viskosität des Fluids, korrespondierenden und insoweit das Fluid beschreibenden Reaktionskräften, z.B. mit dem Massedurchfluss korrelierte Corioliskräfte oder mit der Viskosität korreliert Reibungskräfte etc., wird das Messrohr - angetrieben von einem darauf einwirkenden, elektro-mechanischen Schwingungserreger - im Betrieb zumindest zeitweise vibrierengelassen. Gemäss einer Ausgestaltung der Erfindung wird das dem Führen des zu messenden Mediums dienende Messrohr dabei so angeregt, dass es zumindest zeitweise Biegeschwingungen um eine die beiden Rohrsegment imaginär verbindende, in Richtung der erwähnten Längsachse des Verbund-Systems verlaufende und/oder mit der Längsachse des Verbund-Systems koinzidierende Schwingungsachse ausführt. Als Schwingungserreger 16 können die für diesen Zweck im Stand der Technik von solchen, insb. als Coriolis-Massedurchflussaufnehmer verwendeten, Messaufnehmern vom Vibrationstyp beschriebenen verschiedenen Arten von Schwingungserregern dienen. Mittels des Schwingungserregers 16 wird das Messrohr 13 im Betrieb vorzugsweise zu solchen Biegeschwingungen angeregt, deren Schwingungsfrequenz im wesentlichen gleich einer momentanen mechanischen Eigenfrequenz des Messrohrs mit darin geführtem Fluid ist. Zum Erfassen von Vibrationen des Messrohrs und zum Erzeugen von mit diesen korrespondierenden Vibrationssignalen können in der dem Fachmann bekannten Weise entsprechende Schwingungssensoren in der Nähe des Messrohrs angebracht sein. In der Fig. 1 ist beispielsweise ein erster und ein zweiter Sensor 17, 18 für die einlass- bzw. die auslassseitigen Bewegungen des Messrohrs vorgesehen, von denen jeder jeweils zwischen dessen Mitte und dem einlass- bzw. dem auslassseitigen Endstück, und zwar etwa in gleichem Abstand, angeordnet ist. Im in Fig. 1 gezeigten Ausführungsbeispiel befindet sich auf dem Messrohr am Ort des jeweiligen Sensors ferner ein etwa kreisring- oder kreischeibenförmiger Metallkörper, der mit dem Sensor 17, 18 zusammenwirkt und der nochmals in Fig. 8 in einer perspektivischen Seitenansicht vergrössert dargestellt ist. Als Sensoren 17, 18 können die für diesen Zweck im Stand der Technik von solchen, insb. als Coriolis-Massedurchflussaufnehmer verwendeten, Messaufnehmern vom Vibrationstyp beschriebenen verschiedenen Arten von Sensoren dienen, wie z.B. elektrodynamisch oder optisch arbeitende Weg-, Geschwindigkeits- oder Beschleunigungssensoren.

Wie aus der Fig. 2 bzw. 3 ferner ersichtlich, ist ein, insb. zum ersten Rohrsegment im wesentlichen identisch geformtes, zweites Rohrsegment des Messrohrs in eine Bohrung 3A eines, insb. zum ersten Endstück im wesentlichen identisch geformten, zweiten Endstücks des Messaufnehmers 100 gesteckt. Nach einer Ausgestaltung der Erfindung sind das zweite Rohrsegment und das zweite Endstück in der gleichen Weise miteinander verbunden, wie das erste Rohrsegment mit dem ersten Endstück 11. Das erste Endstück und das hier praktisch ebenfalls als ein Bauteil des Verbund-Systems fungierende zweite Endstück sind weiters mittels wenigstens einer seitlich angeordneten, beispielsweise anmontierten oder angeschweissten, Trägerplatte oder einem im wesentlichen zylindrischen Trägerrohr 4 zu einem das wenigstens eine Messrohr schwingfähig einspannenden Trägerelement vervollständigt. Letzteres ist insoweit auch als ein weiteres Bauteil des Verbund-Systems anzusehen. Anstelle des zylindrischen Trägerrohrs kann aber beispielsweise auch ein eher kastenförmiges Bauteil für das Trägerelement verwendet werden. Beispiele für den Aufbau und die Wirkungsweise solcher Trägerelemente sind u.a. den eingangs bereits erwähnten US-A 48 23 614, US-A 52 53 533, US-A 57 05 754, US-A 57 96 011, US-A 60 06 609, US-A 60 47 457, US-A 61 68 069 US-B 63 14 820, US-B 63 97 685, US-B 64 87 917, US-B 65 16 674, US-B 66 91 583, US-B 66 66 098, US-B 66 98 644, US-B 67 11 958, US-B- 68 51 323 oder WO-A 03/048693 entnehmbar.

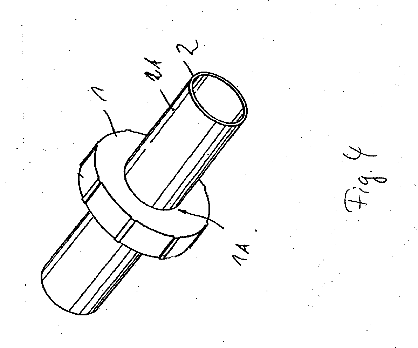

Es sei an dieser Stelle ferner erwähnt, dass anstelle der im Ausführungsbeispiel als Endstück und insoweit eher hülsen- oder rohrförmig ausgebildeten äussere Bauteil 1 auch ein ringförmig, platten- oder auch scheibenförmig ausgebildeter Metallkörper als äusseres Bauteil 1 des Verbund-Systems dienen kann, vgl. hierzu auch Fig. 4. Neben den in den Fig. 2, 3 oder 4 gezeigten Ausführungsbeispielen für das Bauteil 1 mit im wesentlichen kreisförmigen Aussenkonturen können ferner auch solche Bauteile verwendet werden, die eine nicht-kreisförmige Aussenkontur, beispielsweise nach der Art einer Sechskant-Mutter, einer Quadrat-Scheibe oder auch nach der in der US-A 60 47 457 gezeigten Art mit einem seitlichen Fortsatz etc., aufweisen. Demgemäss handelt es sich nach einer weiteren Ausgestaltung der Erfindung bei dem Bauteil 1 um einen Metallkörper, der eine einer Aussen-Umfangsfläche 2A des als Messrohr ausgebildeten inneren Bauteils 2 angepasste Bohrung und eine entsprechende InnenUmfangsfläche aufweist, und der auf der Aussen-Umfangsfläche 2A des Messrohrs unter Bildung des Verbund-Systems entsprechend fixiert worden ist. Das in der Fig. 4 als ring- bzw. scheibenförmiger Metallkörper ausgebildete Bauteil 1 kann, wie bereits angedeutet, als Halterung für einen der bereits erwähnten Schwingungssensoren oder den Schwingungserreger oder aber auch, wie in der WO-A 03/027616 vorgeschlagen, als den Querschnitt des Messrohrs auch bei Druckschwankungen stabilisierendes Versteifungselement dienen.

Erfindungsgemäss ist ferner vorgesehen, dass wenigstens eines von den wenigstens zwei Bauteilen des Verbund-Systems - beispielsweise das Messrohr und/oder der erwähnte Metallkörper - als ein aus chemisch und/oder physikalisch verschiedenen Materialien gebildetes Composite-Formteil ausgebildet ist. Dementsprechend besteht, wie auch in Fig. 2, 3 oder 5 schematisiert dargestellt, zumindest eines der Bauteile des Verbund-Systems, beispielsweise das äussere Bauteil 1, aus wenigstens zwei Materialien, die sich hinsichtlich wenigstens einer werkstofflichen, insb. physikalischen und/oder chemischen, Eigenschaft voneinander unterscheiden. Bei der wenigstens einen die beiden Materialien unterscheidende werkstofflichen Eigenschaft kann sich z.B. um eine innere Materialstruktur, eine Materialdichte, eine Schmelztemperatur, einen Wärmeausdehnungskoeffizienten, eine Bruchfestigkeit und/oder einen Elastizitätsmodul jedes der beiden Materialien handeln. Anders gesagt, ist das Composite-Bauteil 1 insoweit als ein Mehrkomponenten-System ausgebildet, als das es aus wenigstens zwei chemisch unterschiedlichen Materialien besteht, und/oder ist das Composite-Bauteil 1 als insoweit als inhomogenes Mehrphasen-System ausgebildet, als das es aus wenigstens zwei hinsichtlich seiner inneren Struktur, insb. des Materialgefüges, unterschiedlichen Materialien besteht. Nach einer Ausgestaltung der Erfindung handelt es sich bei wenigstens einem der beiden Materialien des Composite-Bauteils 1 um ein Metall, beispielsweise Stahl, Titan, Zirkonium, oder ggf. ein noch edleres Metall, wie Tantal, Gold oder Platin. Nach einer Weiterbildung dieser Ausgestaltung der Erfindung handelt es sich bei jedem der wenigstens zwei voneinander verschiedenen Materialien des Composite-Bauteils um ein Metall. Beispielsweise kann es sich bei den für das Composite-Bauteil 1 verwendeten Materialien jeweils auch um voneinander verschiedene Stahlsorten handeln.

Bei dem in Fig. 2 und 3 beispielhaft gezeigten Messaufnehmer 100 kann das als Composite-Bauteil ausgebildet äussere Bauteil 1 des Verbund-Systems beispielsweise ein erstes Endstück eines das Messrohr einhausenden Aufnehmer-Gehäuses mit einer darin eingebrachten Bohrung 1A sein, das ein einlassseitiges gerades, im wesentlichen kreiszylindrisches erstes Rohrsegment des - hier nur teilweise gezeigten - Messrohrs des Messaufnehmers aufnimmt. Gleichermassen kann auch der vorgenannte Metallkörper als Composite-Bauteil ausgebildet sein. Alternativ oder in Ergänzung dazu kann auch das Messrohr selbst - also auch das zweite Bauteil 2 - ein Composite-Bauteil sein.

Durch die Kombination von den wenigstens zwei unterschiedlichen Materialien (Metallen) in dem wenigstens einen Composite-Bauteil wird es ermöglicht, letzteres in seinen Eigenschaften gut an die chemischen und/oder physikalischen Eigenschaften des jeweils daran fixierten anderen Bauteils des Verbund-Systems sowie auch in entsprechender Weise an chemische und/oder physikalische Eigenschaften allfällig im Verbund-System vorgesehener weitere Bauteile anzupassen. Bei einer geeigneten Kombination der wenigstens zwei Materialien des Bauteils 1 - hier den wenigstens zwei Metallen - einhergehend mit einer dazu passenden Wahl des Materials oder der Materialien für das zweite Bauteil 2 kann ohne weiteres auch eine stoffschlüssige Verbindung, insb. auch eine Löt- und/oder Schweissverbindung, zwischen den beiden Bauteilen 1, 2 hergestellt werden, vgl. hierzu auch Fig. 2, 3 oder 5. Beispielsweise kann so ein anteilig aus Stahl bestehendes Bauteil ohne weiteres auch mit einem anteilig aus Titan und/oder Zirkonium und/oder Tantal bestehenden Bauteil löt- oder schweisstechnisch verbunden werden, sofern die einander kontaktierenden Wirkflächen der beiden Bauteile jeweils aus einem Material bestehen, das zum kontaktierenden Material des jeweils anderen Bauteils schweiss- oder löttechnisch kompatibel ist. Infolgedessen kann bei geeigneter Auswahl der im einzelnen für die Bauteile verwendeten Materialien für das für das erfindungsgemässe Verbund-System auf sehr einfache Weise dauerhaft eine sehr hohe mechanische Festigkeit, insb. auch unter Einwirkung von betriebsbedingt mittel- oder hochfrequent wechselnden Kräften, erzielt werden, wodurch das erfindungsgemässe Verbund-System sehr gut für die Anwendung auf Messaufnehmern vom Vibrationstyp geeignet ist. Darüber hinaus kann so auch ein aus Titan gefertigtes Messrohr unter Zwischenlage des Composit-Bauteils 1 ohne weiteres auch mit einem aus Stahl oder Edelstahl gefertigten Trägerrohr oder - kasten auch durchgängig stoffschlüssig verbunden werden (s. unten). Nach einer Ausgestaltung der Erfindung ist daher wenigstens eines der wenigstens zwei Materialien des Composite-Bauteils 1 so gewählt, dass dieses Material hinsichtlich wenigstens einer physikalischen und/oder chemischen Eigenschaft im wesentlichen gleich ist mit einem Material des daran fixierten Bauteils 2 des Verbund-Systems. In vorteilhafter Weise dabei wenigstens eines der Materialien des Composite-Bauteils so gewählt, dass es im wesentlichen gleich ist mit einem Material des anderen, am Composite-Bauteil fixierten Bauteils des Verbund-Systems.

Um ein möglichst stabile und dauerhafte Verbindung zwischen den Materialien des Composite-Bauteils, insb. auch bei erhöhter mechanischer Beanspruchung, zu erzielen und somit auch eine hohe Dauerfestigkeit des Composite-Bauteils gewährleisten zu können ist gemäss einer Ausgestaltung vorgesehen, dass das Composite-Bauteil 1, wie auch in Fig. 2, 3 oder 5 schematisiert dargestellt, schichtweise aus den wenigstens zwei voneinander verschiedenen Materialien aufgebaut ist. In vorteilhafter Weise weisen dabei jede der wenigstens zwei Materialien eine Schichtdicke von wenigstens 1 mm auf. Gemäss einer weiteren Ausgestaltung der Erfindung ist ferner vorgesehen, dass jedes der wenigstens zwei voneinander verschiedenen Materialien des Composite-Bauteils 1 jeweils wenigstens 1%, insb. jeweils mehr als 10%, von dem Volumen des Composite-Bauteils bilden.

Nach einer anderen Ausgestaltung der Erfindung handelt es sich bei jedem der wenigstens zwei Materialien des ersten Bauteils 1 um ein Metall. Nach einer Weiterbildung dieser Ausgestaltung der Erfindung besteht das Bauteil 1 dabei zumindest teilweise aus Stahl und zumindest teilweise aus Titan und/oder Zirkonium und/oder Tantal und/oder einem anderen, insb. im Vergleich zu Stahl edleren, Metall.

Gemäss einer Weiterbildung der Erfindung sind die wenigstens zwei Bauteile 1, 2 des Verbund-Systems zumindest abschnittsweise, insb. mittels Löt- und/oder Schweissverbindung, miteinander stoffschlüssig verbunden. Zum Herstellen des Verbund-Systems kann das erste Bauteil 1 - beispielsweise also vorgenanntes Endstück - mit dem zweiten Bauteil 2 - beispielsweise also dem Messrohr - in der Weise zusammengeführt werden, dass sich das zweite Bauteil 2 zumindest teilweise durch die im ersten Bauteil 1 gebildete Bohrung 1A in Richtung der Längsachse L des Verbund-Systems erstreckt. Daran anschliessend können beide Bauteile miteinander verschweisst und/oder verlötet werden. Nach einer anderen Weiterbildung der Erfindung sind die beiden Bauteile 1, 2 des Verbund-Systems zumindest teilweise über eine entlang eines Kontaktbereichs zwischen den beiden Bauteilen, beispielsweise durch Diffusionsschweissen und/oder einen Sinterprozess, gebildete Diffusionszone miteinander stoffschlüssig verbunden; falls erforderlich können zusätzlich angebrachte Löt- oder Schweissverbindungen die Festigkeit des Verbund-Systems noch weiter verbessern.

Alternativ oder in Ergänzung zum stoffschlüssigen Verbinden wenigstens der zwei Bauteile des Verbund-Systems sind die beiden Bauteile sowie deren einander kontaktierenden Oberflächen gemäss einer Weiterbildung der Erfindung ferner so ausgebildet und so geformt, dass die beiden Bauteile 1, 2, wie beispielsweise auch in der US-B 65 98 281, der US-B 65 19 828, der US-A 60 47 457, der US-A 56 10 342, der WO-A 03/048693 oder den eingangs erwähnten deutschen Anmeldungen DE102004048765.0 oder DE10354373.2 vorgeschlagen, anteilig auch unter Bildung eines Reibschlusses und/oder eines Formschlusses miteinander mechanisch fest verbunden sind. Ferner sind die Oberflächen der Bauteile 1, 2 so geformt, dass der darüber hergestellte Reibschluss auch in einer Umfangsrichtung der äusseren Oberfläche des zweiten Bauteils 2 wirkt. Dies wird bei dieser Ausgestaltung des erfindungsgemässen Verbund-System dadurch erreicht, dass auf dessen durch die einander kontaktierenden Oberflächen der beiden Bauteile 1, 2 gebildete Wirkflächen 1B, 2B Einspannkräfte, insb. radial zur Längsachse 2 ausgerichtete Normalkräfte F, so einwirken, dass wenigstens eines der beiden Bauteile des Verbund-System zumindest anteilig dauerhaft elastisch verformt ist. Diese Normalkräfte werden nach einer Ausgestaltung der Efindung zumindest anteilig dadurch erzeugt, daß wenigstens eines der beiden Bauteile 1, 2 gemischt elastisch-plastisch verformt ist, also sowohl plastisch verformte Bereiche, die durch Dehnung oder Stauchung des betreffend Bauteils darin eingefiragen worden sind, als auch daraus resultierend dauerhaft elastisch verformte Bereiche aufweist. Die beiden Bauteile 1,2 des Verbund-Systems bilden somit zumindest anteilig einen, insb. in Richtung der Längsachse L und/oder in einer Umfangsrichtung der äußeren Oberfläche des zweiten Bauteils 2 wirkenden, Preßverband.

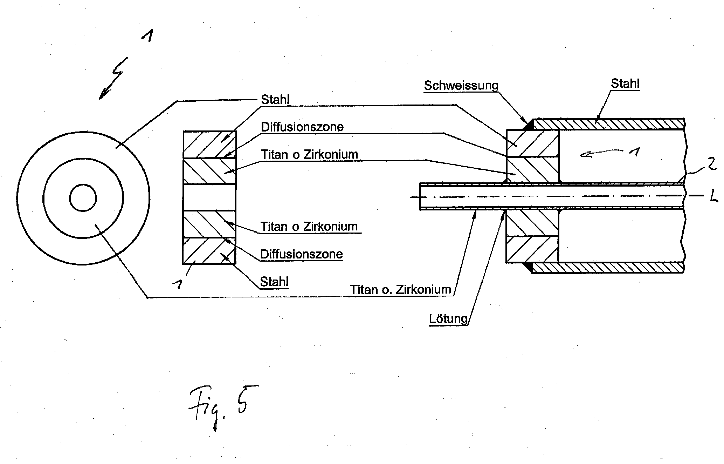

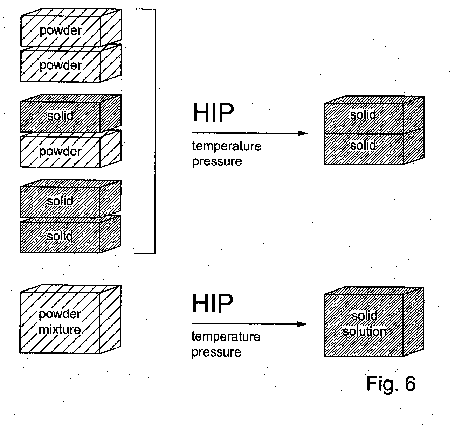

Gemäß einer weiteren Ausgestaltung der Erfindung ist zumindest eines der wenigstens zwei Materialien des Bauteil 1 gesintert, d.h. das Bauteil 1 besteht zumindest anteilig aus gesintertem Material. Insoweit handelt sich in dieser Ausgestaltung der Erfindung bei dem Composite-Bauteil 1 also um ein Sinterformteil oder ein zumindest teilweise gesintertes Bauteil. Aufgrund von dadurch im Inneren des Bauteils 1 zwischen den einzelnen Kristallen und/oder Partikeln der beiden Materialien gebildeten - erfindungsgemäßen - Diffusionszonen DZ wird trotz der chemisch/physikalischen Unterschiedlichkeiten der beiden Materialien dauerhaft ein hochfester, zumindest teilweise stoffschlüssiger Verbund zwischen diesen gebildet vgl. Fig. 5 und 6.

Infolgedessen kann einerseits eine optimale Anpassung der chemisch/physikalischen Eigenschaften des ersten Bauteils an die des damit verbundenen zweiten Bauteils 2 erfolgen. Anderseits kann so auch eine sehr hohe mechanische Stabilität des so hergestellten Bauteils 1 und insofern auch des Verbund-Systems selbst erzielt werden. Zum Herstellen des wenigstens einen zumindest teilweise gesinterten Bauteils 1 wird in geeigneter Weise schüttfähige, also körniges und/oder pulverförmiges, Sinterausgangsmaterial in eine entsprechende Sinterform gegeben und anschließend unter Zufuhr von Wärme, ggf. auch unter Vakuum, entsprechend gesintert, vgl, hierzu auch Fig 6. Wie in Fig. 6 schematisiert dargestellt können dabei als Ausgangsmaterialien für die Herstellung des Bauteils 1 verschiedene sinterfähigen Pulver und/oder Granulate dienen, die aufeinander geschichtete und/oder miteinander vermischt und/oder auf Feststoff-Oberflächen appliziert werden.

Das Sintern kann dabei beispielsweise in einem entsprechenden Sinterofen oder in einem Autoklaven erfolgen. Nach einer weiteren Ausgestaltung der Erfindung wird die Sinterform dabei zumindest teilweise durch wenigstens ein, beispielsweise rohrförmiges, Halbzeug gebildet, das nach dem Sintern, beispielsweise infolge von Diffusion zwischen den einzelnen Materialien und/oder Phasen, integraler Bestandteil des ersten Bauteils 1 ist. Dementsprechend kann dieses Halbzeug zumindest teilweise auch aus zumindest einem der für das Bauteil vorgesehenen Materialien bestehen. Bei dem dafür verwendeten Halbzeug kann sich z.B. um ein gezogenes, gewalztes oder gegossenes Halbzeug handeln, so dass also zumindest für diesen Fall das Bauteil 1 zumindest teilweise auch aus einem gegossenen und/oder gewalzten und/oder einem gezogenen Material bestehen kann. Gleichwohl kann das als Sinterform dienende Halbzeug aber auch selbst gesintert sein.

Nach einer anderen Ausgestaltung der Erfindung wird die Sinterform zumindest teilweise durch das zumindest teilweise vorgefertigte zweite Bauteil 2 gebildet. Nach einer Weiterbildung dieser Ausgestaltung der Erfindung wird das erste Bauteil 1, praktisch direkt auf das andere Bauteil aufgesintert wird. Somit können zum einen beide Bauteile 1, 2 des Verbundsystems, insb. in deren Kontaktbereichen, auf sehr einfache Weise zueinander angepasst werden. Zum anderen kann durch geeignete Auswahl der für die einzelnen Bauteile 1, 2 bzw. deren Herstellung verwendeten Materialien sowie durch entsprechende Kalibrierung des Sinterprozesses, dass infolge von Diffusionserscheinungen auch im Kontaktbereich zwischen dem formgebenden zweiten Bauteil 2 und dem Sintermaterial für das erste Bauteil 1 bereits bei mit dessen Herstellung eine feste Verbindung zwischen den beiden Bauteilen 1, 2 und insoweit das Verbund-Systems zumindest anteilig bereits durch das Sintern gebildet werden. Beispielsweise kann das wenigstens eine zumindest teilweise gesinterte Composite-Bauteil so in vorteilhafter Weise in-situ, also zumindest in der endgültigen Position und Lage, ggf. auch in der endgültigen Form, direkt auf dem anderen Bauteil aufgesintert und mit diesem über ein zwischen den einander kontaktierenden Materialien beider Bauteile gebildet Diffusionszone stoffschlüssig verbunden werden. Dementsprechend kann sowohl eines der Bauteile für sich genommen als auch das gesamte Verbund-System als Sinterformteil ausgebildet sein.

Nach einer weiteren Ausgestaltung der Erfindung ist wenigstens das erste Bauteil 1 zumindest teilweise mittels Heisspressens hergestellt. In vorteilhafter Weise ist erfolgt das Sintern des Bauteils zumindest anteilig inform eines isostatischen Heisspressen (HIP = hot isostatic pressure) und ist das Bauteil 1 insoweit als gehiptes Bauteil ausgebildet.

Nach einer Weiterbildung dieser Ausgestaltung der Erfindung erfolgt das Sintern bei einem hohen Arbeitsdruck von über 800 bar und/oder einer hohen Arbeitstemperatur von über 700°C, wobei Arbeitsdruck und Arbeitstemperatur im konkreten Anwendungsfall so eingestellt werden, dass eine für das Composite-Bauteil gewünschte Dichte und/oder Porosität erzielt wird. Gemäss einer Ausgestaltung der Erfindung ist ein Porositätsgrad des Composite-Bauteils, also ein Volumenanteil, der die Gesamtheit aller Poren des Composite-Bauteils bestimmt, kleiner als 10%, insb. wesentlich kleiner als 5%, gewählt.

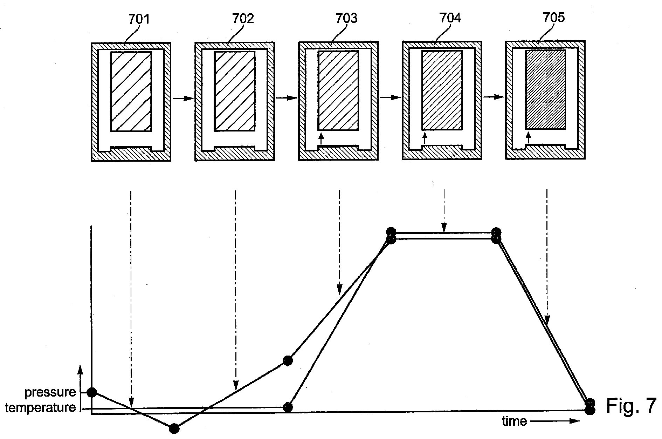

Nach einer Weiterbildung dieser Ausgestaltung der Erfindung erfolgt das Sintern in einem Sinterofen mit einstellbarem Atmosphärendruck in dessen Brennraum zunächst die beiden Materialien für das Composite-Bauteil 1 verbracht werden (Fig. 7, 701). Anschliessend wird der Brennraum evakuiert, um danach mit einem inerten Schutzgas, beispielsweise Argon, NH₃-Spaltgas, Methan, Leuchtgas etc., befüllt zu werden, so dass im Brennraum ein Atmosphärendruck von 300 bar oder mehr aufgebaut wird (Fig. 7, 702). Durch Aufheizen des Brennraums auf über 700°C wird der Atmosphärendruck im Brennraum auf weit über 800 bar, beispielsweise etwa 1400 bar, gesteigert (Fig. 7, 703). Die letztlich im Brennraum eingestellte Arbeitstemperatur und der dabei anstehende Atmosphärendruck werden für eine vorgebbare, insb. vorab experimentell bestimmte, Haltezeit auf einem möglichst konstanten Niveau gehalten, so dass die verwendeten Materialien schliesslich gut aneinander haften, (Fig. 7, 704). Nach dem Ablauf der Haltezeit werden Arbeitsdruck und -temperatur in geeigneter Weise mit vorab entsprechend bestimmten Zeitverläufen wieder abgebaut, (Fig. 7, 705).

Nach einer weiteren Ausgestaltung der Erfindung sind die wenigstens zwei für das Bauteil 1 verwendeten Materialien hinsichtlich einer werkstofflichen Eigenschaft, wie z.B. der bereits erwähnten Schmelztemperatur, der Bruchfestigkeit und/oder dem Elastizitätsmodul, einander im wesentlichen gleich oder zumindest ähnlich.

Nach einer vorteilhaften Weiterbildung der Erfindung ist ferner vorgesehene, dass das Verbund-System weiters wenigstens auch ein drittes Bauteil 3 umfasst, das am ersten Bauteil 1 und/oder am zweiten Bauteil 2, insb. ebenfalls stoffschlüssig, fixiert ist. Beispielsweise kann - wie bereits erwähnt - eines der Bauteile 1, 2 des Verbund-Systems ein Metallkörper sein, der auf das anderen, als Messohr des Messaufnehmers dienenden Bauteil aufgeschoben und daselbst fixiert ist, während das dritte Bauteil 3, wie auch in Fig. 5 schematisch dargestellt, als ein Trägerelement - beispielsweise ein Trägerrohr - des Messaufnehmers ausgebildet ist, das mittels des insoweit als erster Koppler dienenden Metallkörpers und ggf. eines von diesem beabstandet am Messrohr fixierten weiteren, zweiten Kopplers an das Messrohr gekoppelt ist, vgl. hierzu auch die bereits erwähnten US-B- 68 51 323, US-B 65 19 828 oder der US-B 65 98 281, US-A 60 47 457. Gemäss einer vorteilhaften Ausgestaltung dieser Weiterbildung der Erfindung besteht das Messrohr, wie bereits erwähnt, in überwiegendem Masse aus Titan, Tantal oder Zirkonium, während das Trägerelement überwiegend aus Stahl oder Edelstahl besteht. Ferner ist das Composite-Bauteil 1 dabei anteilig aus Stahl und in entsprechendem Masse aus Titan, Tantal oder Zirkonium oder zumindest aus einem mit dem Messrohr stoffschlüssig verbindbaren Material aufgebaut, so dass das Composite-Bauteil 1 sowohl mit dem hier als Messrohr ausgebildeten zweiten Bauteil als auch mit dem hier als Trägerrohr ausgebildeten dritten Bauteil 3 verlötet und/oder verschweisst werden kann. Insoweit besteht also das dritte Bauteil 3 einerseits aus einem Material, das sich hinsichtlich wenigstens einer physikalischen und/oder chemischen Eigenschaft, insb. einer Schmelztemperatur, eines Wärmeausdehnungskoeffizienten und/oder hinsichtlich des Elastizitätsmoduls etc., von einem Material des zweiten Bauteils 2 unterscheidet. Gleichermassen kann das dritte Bauteil 3 darüber hinaus aus einem Material bestehen, das hinsichtlich wenigstens einer physikalischen und/oder chemischen Eigenschaft, insb. einer Schmelztemperatur und/oder eines Wärmeausdehnungskoeffizienten etc., zumindest insofern gleich ist mit dem Material des zweiten Bauteils 2, dass es mit diesem über die einander gleichenden Materialien stoffschlüssig verbindbar ist. Dementsprechend ist nach einer weiteren Ausgestaltung dieser Weiterbildung der Erfindung das erste Bauteil 1 sowohl mit dem zweiten Bauteil 2 als auch mit dem dritten Bauteil 3 jeweils zumindest abschnittsweise stoffschlüssig, beispielsweise durch Löten oder Schweissen, verbunden.

Es sei an dieser Stelle noch erwähnt, dass insbesondere bei der Verwendung nur eines einzigen Messrohrs im Messaufnehmer 100 das vorgenannte Trägerelement sowohl als Halterung für Messrohr, Erregeranordnung sowie Sensoranordnung als auch als Gegenschwinger zum Messrohr dienen kann, mittels dem im Betrieb allfällige Störschwingungen kompensiert oder zumindest verringert werden. Dementsprechend ist nach einer Ausgestaltung der dieser Weiterbildung der Erfindung vorgesehen, dass das dritte Bauteil 3 als ein das Messrohr umhüllender, insb. zylindrischer und im wesentlichen koaxial zum Messrohr ausgerichteter, Gegenschwinger des Messaufnehmers ausgebildet ist. Nach einer anderen Ausgestaltung der vorbeschriebenen Weiterbildung ist das dritte Bauteil 3 als das bereits erwähnte, endseitig am Messrohr fixierte und dieses umhüllende Aufnehmer-Gehäuse des Messaufnehmers 100 ausgebildet. Gleichwohl kann auch der oben erwähnte zweite Koppler oder auch einer der oben erwähnten Flansche jeweils als das dritte Bauteil 3 des Verbund-Systems angesehen werden, dass in diesem Falle vom ersten Bauteil 1 beabstandet angeordnet und zum ersten Bauteil 1 im wesentlichen identisch ausgebildet ist.

Wie sich aus der Gesamtheit der vorangehenden Erläuterungen unschwer erkennen lässt, ist ein Vorteil der Erfindung im besonderen darin zu sehen, dass sie auch für die Anwendung auf Bauteile von Messaufnehmern vom Vibrationstyp geeignet ist, welche Bauteile aus verschiedenen Materialien bestehen, und welche Bauteile sich in der Weise stofflich voneinander unterscheiden, dass sie auf herkömmliche Art nicht oder nur mit erheblichem fertigungstechnischen Aufwand miteinander verschweissbar oder anderweitig stoffschlüssig verbindbar wären. Somit kann unter Anwendung der vorliegenden Erfindung im Vergleich zu herkömmlichen Messaufnehmern vom Vibrationstyp eine Auszugsfestigkeit des Verbund-Systems und insoweit auch eine Dauerfestigkeit des Verbund-Systems erheblich verbessert werden.

Neben der Maximierung der Auszugsfestigkeit des Verbund-Systems kann so auch die Vibrationsfestigkeit und somit auch eine maximal mögliche oder zulässige Schwingspielzahl für das Messrohr erhöht werden. In Kenntnis der Erfindung und vor dem Hintergrund des eingangs referierten Standes der Technik, insb. der US-A 56 10 342, der US-A 60 47 457, der US-A 61 68 069, der US-B 65 19 828, der US-B 65 98 281 oder der WO-A 03/048693, besteht für den Fachmann auch keinerlei Schwierigkeit darin, die für die jeweilige Anwendung geeigneten Materialien für die Bauteile sowie die optimalen Parameter, sei es nun hinsichtlich der tatsächlichen Dimensionierung der Bauteile des Verbund-Systems oder auch der hinsichtlich der Einstellung der für die Fertigung verwendeten Werkzeuge und Maschinen, zu ermitteln. Gleichermassen besteht nunmehr für den Fachmann auch keine Schwierigkeit darin, das erfindungsgemässe Verfahren entsprechend den konkreten Anforderungen an die Haltbarkeit des Verbund-Systems anzupassen und hinsichtlich der Fertigungsabläufe zu optimieren.

## Patentansprüche

1. Meßaufnehmer vom Vibrationstyp, insb. Coriolis-Massendurchfluß-Meßaufnehmer, für ein dem Messen eines in einer Leitung strömenden Mediums dienendes Meßgerät, welcher Meßaufnehmer wenigstens ein mittels wenigstens eines, insb. aus Metall bestehenden, ersten Bauteils (1) und mittels wenigstens eines, insb. aus Metall bestehenden, zweiten Bauteils (2) gebildetes, insb. bi- oder polymetallisches, Verbund-System (1, 2) umfaßt,
- wobei wenigstens das erste Bauteil (1) des Verbund-Systems als ein Composite-Formteil ausgebildet ist, das aus wenigstens zwei Materialien, insb. wenigstens zwei Metallen, besteht, die sich hinsichtlich wenigstens einer physikalischen und/oder chemischen Eigenschaft, insb. einer Materialdichte, einer Schmelztemperatur, eines Wärmeausdehnungskoeffizienten und/oder hinsichtlich des Elastizitätsmoduls, voneinander unterscheiden,
- **dadurch gekennzeichnet dass** die wenigstens zwei Materialien des ersten Bauteils (1) über eine im Inneren des ersten Bauteils (1) zumindest abschnittsweise gebildeten Diffusionszone zumindest teilweise stoffschlüssig miteinander verbunden sind.

2. Meßaufnehmer nach Anspruch 1,
- wobei jedes der wenigstens zwei voneinander verschiedenen Materialien des ersten Bauteils (1) jeweils wenigstens 1 %, insb. jeweils mehr als 10%, von dessen Volumen bildet; und/oder
- wobei das erste Bauteil (1) schichtweise aus den wenigstens zwei voneinander verschiedenen Materialien aufgebaut ist, und wobei jedes der zwei Materialien eine Schichtdicke von wenigstens 1 mm aufweist; und/oder
- wobei ein Porositätsgrad des Composite-Bauteils kleiner als 10%, insb. wesentlich kleiner als 5%, gewählt ist; und/oder
- wobei wenigstens eines der wenigstens zwei Materialien des ersten Bauteils (1) hinsichtlich wenigstens einer physikalischen und/oder chemischen Eigenschaft im wesentlichen gleich ist mit einem Material des zweiten Bauteils (2); und/oder
- wobei die beiden Bauteile (1, 2) des Verbund-Systems anteilig unter Bildung eines Reibschlusses und/oder eines Formschlusses miteinander mechanisch fest verbunden sind; und/oder
- wobei wenigstens das erste Bauteil (1) des Verbund-Systems zumindest teilweise aus gesintertem Material besteht.

3. Meßaufnehmer nach einem der vorherigen Ansprüche, wobei wenigstens das erste Bauteil (1) zumindest teilweise mittels Heißpressens, insb. durchgeführt bei einem hohen Arbeitsdruck von über 800 bar und/oder einer hohen Arbeitstemperatur von über 700°C, hergestellt ist.

4. Meßaufnehmer nach dem vorherigen Anspruch, wobei das erste Bauteil (1) mittels isostatischen Heißpressens hergestellt ist.

5. Meßaufnehmer nach einem der vorherigen Ansprüche, wobei wenigstens das erste Bauteil (1) teilweise aus einem gegossenen und/oder gewalzten und/oder einem gezogenen Material besteht.

6. Meßaufnehmer nach einem der vorherigen Ansprüche, wobei wenigstens eines der Bauteile (1, 2) zumindest teilweise aus wenigstens einem Metall besteht.

7. Meßaufnehmer nach dem vorherigen Anspruch, wobei sowohl das erste Bauteil als auch das das zweite Bauteil jeweils zumindest teilweise aus Metall bestehen.

8. Meßaufnehmer nach einem der vorherigen Ansprüche,
- wobei wenigstens eines der Bauteile zumindest teilweise aus Stahl, insb. Edelstahl, besteht; und/oder
- wobei wenigstens eines der Bauteile zumindest teilweise aus Titan, insb. einer Titan-Legierung, besteht; und/oder
- wobei wenigstens eines der Bauteile zumindest teilweise aus Tantal, insb. einer Tantal-Legierung, besteht; und/oder
- wobei wenigstens eines der Bauteile zumindest teilweise aus Zirkonium, insb. einer Zirkonium-Legierung, besteht; und/oder
- wobei es sich bei jedem der wenigstens zwei Materialien des ersten Bauteils (1) um ein Metall handelt; und/oder
- wobei das erste Bauteil (1) zumindest teilweise aus Stahl und zumindest teilweise aus Titan und/oder Zirkonium und/oder Tantal besteht.

9. Meßaufnehmer nach einem der vorherigen Ansprüche, wobei die beiden Bauteile (1, 2) des Verbundsystems zumindest abschnittsweise, insb. mittels Löt- und/oder Schweißverbindung, miteinander stoffschlüssig verbunden sind.

10. Meßaufnehmer nach Anspruch 9, wobei die beiden Bauteile (1, 2) des Verbundsystems zumindest abschnittsweise über eine Diffusionszone miteinander verbunden sind.

11. Meßaufnehmer nach dem vorherigen Anspruch, wobei das erste Bauteil (1) unter Bildung der Diffusionszone direkt auf das zweite Bauteil (2) aufgesintert ist.

12. Meßaufnehmer nach einem der vorherigen Ansprüche,
- wobei die beiden Bauteile (1, 2) des Verbundsystems zumindest abschnittsweise, insb. mittels eines Kunststoffes, miteinander adhäsiv verbunden sind; und/oder
- wobei sich eines der beiden Bauteile des Verbundsystems zumindest teilweise durch das andere Bauteil (1) entlang einer gedachten Längsachse (L) des Verbund-Systems erstreckt; und/oder
- wobei eines der wenigstens zwei Bauteile (1, 2) des Verbund-Systems das andere der wenigstens zwei Bauteile (1, 2) zumindest abschnittsweise zumindest teilweise umgreift.

13. Meßaufnehmer nach einem der vorherigen Ansprüche, wobei eines der wenigstens zwei Bauteile (1, 2) des Verbund-Systems mit einer zumindest teilweise gewölbten, insb. als Zylinderoberfläche ausgebildeten, äußeren Oberfläche eine innere Oberfläche des anderen der wenigstens zwei Bauteile (1, 2) des Verbund-Systems Bauteils (1) flächig kontaktiert.

14. Meßaufnehmer nach Anspruch 13,
- wobei die innere Oberfläche durch eine Innenwand einer sich zumindest in einen Teilbereich des jeweiligen Bauteils (1, 2) erstreckenden Bohrung gebildet ist; und/oder
- wobei die beiden Bauteile (1, 2) des Verbundsystems zumindest anteilig einen, insb. in Richtung der Längsachse und/oder in einer Umfangsrichtung der äußeren Oberfläche des zweiten Bauteils (2) wirkenden, Preßverband bilden; und/oder
- wobei auf durch die einander kontaktierenden Oberflächen der beiden Bauteile (1, 2) des Verbundsystems gebildete Wirkflächen des Verbund-Systems Einspannkräfte, insb. radial zur Längsachse ausgerichtete Normalkräfte, so einwirken, daß wenigstens eines der beiden Bauteile (1, 2) des Verbundsystems zumindest anteilig dauerhaft elastisch, insb. gemischt elastisch-plastisch, verformt ist.

15. Meßaufnehmer nach einem der vorherigen Ansprüche,
- wobei wenigstens eines der Bauteile (1, 2) zumindest teilweise dauerhaft elastischen, insb. gemischt plastisch-elastischen, Verformungen unterworfen ist; und/oder
- wobei wenigstens eines der Bauteile (1, 2) des Verbundsystems ringförmig ausgebildet ist; und/oder
- wobei wenigstens eines der Bauteile (1, 2) des Verbundsystems hülsenförmig ausgebildet ist; und/oder
- wobei wenigstens eines der Bauteile (1, 2) des Verbundsystems rohrförmig, insb. nämlich als ein zumindest abschnittsweise gerades, kreiszylindrisches Rohr.

16. Meßaufnehmer nach einem der vorherigen Ansprüche, wobei das Verbund-System weiters ein drittes Bauteil (3) umfaßt, das am ersten Bauteil (1) und/oder am zweiten Bauteil (2) fixiert ist.

17. Meßaufnehmer nach Anspruch 16,
- wobei das erste Bauteil (1) sowohl mit dem zweiten Bauteil (2) als auch mit dem dritten Bauteil (3) jeweils zumindest abschnittsweise stoffschlüssig verbunden ist; und/oder
- wobei das dritte Bauteil (3) aus einem Material besteht, das sich hinsichtlich wenigstens einer physikalischen und/oder chemischen Eigenschaft, insb. einer Schmelztemperatur, eines Wärmeausdehnungskoeffizienten und/oder hinsichtlich des Elastizitätsmoduls, von einem Material des zweiten Bauteils (2) unterscheidet; und/oder
- wobei das dritte Bauteil (3) vom ersten Bauteil (1) beabstandet angeordnet und/oder zum ersten Bauteil (1) im wesentlichen identisch ausgebildet ist.

18. Meßaufnehmer nach einem der vorherigen Ansprüche, wobei eines der Bauteile (1, 2) des Verbund-Systems als ein dem Führen des zu messenden Mediums dienendes, im Betrieb des Meßaufnehmers vibrierendes, insb. zumindest zeitweise Biegeschwingungen um eine in Richtung der Längsachse des Verbund-Systems verlaufende und/oder mit der Längsachse des Verbund-Systems koinzidierende Schwingungsachse ausführendes, Meßohr des Meßaufnehmers ausgebildet ist.

19. Meßaufnehmer nach Anspruch 18, wobei das erste Bauteil (1) als Meßrohr ausgebildet ist und wobei das zweite Bauteil (2) als ein auf dem Meßrohr fixierter, insb. plattenförmiger oder scheibenförmiger, Metallkörper ausgebildet ist.

20. Meßaufnehmer nach Anspruch 18, wobei das zweite Bauteil (2) als Meßrohr ausgebildet ist und wobei das erste Bauteil (1) als ein auf dem Meßrohr fixierter, insb. plattenförmiger oder scheibenfürmiger, Metallkörper ausgebildet ist.

21. Meßaufnehmer nach einem der Ansprüche 16 bis 18, wobei eines der Bauteile (1, 2) des Verbund-Systems als ein dem Führen des zu messenden Mediums dienendes, im Betrieb des Meßaufnehmers vibrierendes, insb. zumindest zeitweise Biegeschwingungen um eine in Richtung der Längsachse des Verbund-Systems verlaufende und/oder mit der Längsachse des Verbund-Systems koinzidierende Schwingungsachse ausführendes, Meßohr des Meßaufnehmers ausgebildet ist und wobei das dritte Bauteil (3) als ein schwingfähig am des Meßrohr fixiertes und/oder das Meßrohr schwingfähig halterndes Trägerelement des Meßaufnehmers ausgebildet ist.

22. Meßaufnehmer nach Anspruch 21, wobei das dritte Bauteil (3) als ein das Meßrohr umhüllendes Aufnehmer-Gehäuse des Meßaufnehmers ausgebildet ist.

23. Meßaufnehmer nach Anspruch 21, wobei das dritte Bauteil (3) als ein das Meßrohr umhüllender, insb. zylindrischer und im wesentlichen koaxial zum Meßrohr ausgerichteter, Gegenschwinger des Meßaufnehmers ausgebildet ist.

24. Meßaufnehmer nach einem der Ansprüche 18 bis 23, wobei wenigstens eines der Bauteile (1, 2,3) des Verbund-Systems als ein an einem Ende des Meßrohrs fixierter, dem Anschließen einer als Rohrleitung ausgebildeten Leitung an das Meßrohr dienender Flansch des Meßaufnehmers ausgebildet ist.

## Claims

1. Vibronic-type sensor, particularly a Coriolis mass flow sensor, for a measuring device used to measure a medium flowing through a pipe, said sensor comprising at least one, particularly bi-metal or poly-metal, composite system (1, 2) consisting of at least a first component (1), particularly made of metal, and of at least a second component (2), particularly made of metal,
- wherein at least the first component (1) of the composite system is designed as a composite molded part that consists of at least two materials, particularly at least two metals, that differ from one in terms of at least a physical and/or chemical property, particularly a material density, a melting temperature, a thermal expansion coefficient and/or the elasticity module
**characterized in that**
the at least two materials of the first component (1) are at least partially interconnected by substance bonding via a diffusion zone at least partially formed in the interior of the first component (1)

2. Sensor as claimed in Claim 1,
- wherein each of the at least two different materials of the first component (1) forms, in each case, at least 1%, particularly more than 10%, of the component's volume; and/or
- wherein the first component (1) is constructed in layers from the at least two different materials, and wherein each of the two materials has a layer thickness of at least 1 mm; and/or
- wherein a level of porosity of the composite component is selected as less than 10%, particularly less than 5%; and/or
- wherein at least one of the at least two materials of the first component (1) is essentially identical to a material of the second component (2) in terms of at least a physical and/or chemical property; and/or
- wherein the two components (1, 2) of the composite system are firmly interconnected by mechanical means on a proportionate basis with the formation of a frictional connection and/or positive locking; and/or
- wherein at least the first component (1) of the composite system at least partially consists of sintered material.

3. Sensor as claimed in one of the previous claims, wherein at least the first component (1) is at least partially manufactured by means of hot pressing, particularly performed at a high operating pressure of over 800 bar and/or a high operating temperature of over 700 °C.

4. Sensor as claimed in the previous claim, wherein the first component (1) is manufactured by means of hot isostatic pressing.

5. Sensor as claimed in one of the previous claims, wherein at least the first component (1) partially consists of a cast and/or a rolled and/or a drawn material.

6. Sensor as claimed in one of the previous claims, wherein at least one of the components (1, 2) at least partially consists of at least one metal.

7. Sensor as claimed in the previous claim, wherein both the first component and the second component each at least partially consists of metal.

8. Sensor as claimed in one of the previous claims,
- wherein at least one of the components consists at least partially of steel, particularly stainless steel; and/or
- wherein at least one of the components consists at least partially of titanium, particularly a titanium alloy; and/or
- wherein at least one of the components consists at least partially of tantalum, particularly a tantalum alloy; and/or
- wherein at least one of the components consists at least partially of zirconium, particularly a zirconium alloy; and/or
- wherein each of the at least two materials of the first component (1) is a metal; and/or
- wherein the first component (1) at least partially consists of steel and at least partially consists of titanium and/or zirconium and/or tantalum.

9. Sensor as claimed in one of the previous claims, wherein the two components (1, 2) of the composite system are interconnected, at least in sections, by substance bonding, particularly by means of a solder and/or weld connection.

10. Sensor as claimed in Claim 9, wherein the two components (1, 2) of the composite system are at least partially interconnected via a diffusion zone.

11. Sensor as claimed in the previous claim, wherein, with the formation of the diffusion zone, the first component (1) is directly sintered onto the second component (2).

12. Sensor as claimed in one of the previous claims,
- wherein the two components (1, 2) of the composite system are adhesively interconnected at least in sections, particularly by means of a glue; and/or
- wherein one of the two components of the composite system extends at least partially through the other component (1) along an imaginary longitudinal axis (L) of the composite system; and/or
- wherein one of the at least two components (1, 2) of the composite system at least partially encompasses the other of the at least two components (1, 2) at least in sections.

13. Sensor as claimed in one of the previous claims, wherein one of the at least two components (1, 2) of the composite system contacts an inner surface of the other of the at least two components (1, 2) with an at least partially curved outer surface, particularly one designed as a cylinder surface.

14. Sensor as claimed in Claim 13,
- wherein the inner surface is formed by an inner wall of a bore extending at least in a part of the component in question (1, 2)
- wherein the two components (1, 2) of the composite system form, at least on a proportionate basis, an interference fit, particularly in the direction of the longitudinal axis and/or in a peripheral direction of the outer surface of the second component (2); and/or
- wherein clamping forces, particularly normal forces radially aligned with the longitudinal axis, act on the composite system's active surfaces, which are formed by the surfaces of the two components (1, 2) of the composite system that contact one another, in such a way that at least one of the two components (1, 2) of the composite system is at least partially permanently deformed in an elastic manner, particularly in a mixed elastic/plastic manner.

15. Sensor as claimed in one of the previous claims,
- wherein at least one of the components (1, 2) is at least partially permanently subject to elastic deformations, particularly mixed plastic/elastic deformations; and/or
- wherein at least one of the components (1, 2) of the composite system has an annular design; and/or
- wherein at least one of the components (1, 2) of the composite system has a sleeve-like design; and/or
- wherein at least one of the components (1, 2) of the composite system has a tubular design, particularly namely as a plain cylindrical tube which is at least straight in sections.

16. Sensor as claimed in one of the previous claims, wherein the composite system further comprises a third component (3) which is fixed on the first component (1) and/or the second component (2).

17. Sensor as claimed in Claim 16,
- wherein the first component (1) is connected in each case to both the second component (2) and to the third component (3) via substance bonding at least in sections; and/or
- wherein the third component (3) consists of a material which differs from a material of the second component (2) in terms of at least a physical and/or chemical property, particularly a melting temperature, a thermal expansion coefficient and/or the elasticity module; and/or
- wherein the third component (3) is arranged at a distance from the first component (1) and/or has an essentially identical design to the first component (1).

18. Sensor as claimed in one of the previous claims, wherein one of the components (1, 2) of the composite system is designed as a measuring tube of the sensor, said tube serving to conduct the medium under measurement, vibrating when the sensor is in operation, and particularly executing, at least temporarily, flexural vibrations around an axis of oscillation which extends in the direction of the longitudinal axis of the composite system and/or coincides with the longitudinal axis of the composite system.

19. Sensor as claimed in Claim 18, wherein the first component (1) is designed as a measuring tube and wherein the second component (2) is designed as a metal body, particularly plate-shaped or disc-shaped, which is fixed on the measuring tube.

20. Sensor as claimed in Claim 18, wherein the second component (2) is designed as a measuring tube and wherein the first component (1) is designed as a metal body, particularly plate-shaped or disc-shaped, which is fixed on the measuring tube.

21. Sensor as claimed in one of the Claims 16 to 18, wherein one of the components (1, 2) of the composite system is designed as a measuring tube of the sensor, said tube serving to conduct the medium under measurement, vibrating when the sensor is in operation, and executing, at least temporarily, flexural vibrations around an axis of oscillation which extends in the direction of the longitudinal axis of the composite system and/or coincides with the longitudinal axis of the composite system and wherein the third component (3) is designed as a support element of the sensor which is fixed on the measuring tube in a manner that is capable of oscillation and/or holds the measuring tube in a manner that is capable of oscillation.

22. Sensor as claimed in Claim 21, wherein the third component (3) is designed as a sensor housing of the measuring sensor that encompasses the measuring tube.

23. Sensor as claimed in Claim 21, wherein the third component (3) is designed as a counter-oscillator of the sensor that encompasses the measuring tube and in particular is cylindrical and is essentially aligned coaxially to the measuring tube.

24. Sensor as claimed in one of the Claims 18 to 23, wherein at least one of the components (1, 2, 3) of the composite system is designed as a flange of the sensor that is fixed on an end of the measuring tube and serves to connect a conduit designed as a pipe to the measuring tube.

## Revendications

1. Capteur du type à vibration, notamment un débitmètre massique Coriolis, destiné à un appareil de mesure servant à mesurer un produit s'écoulant dans une conduite, lequel capteur comprend au moins un système composite (1, 2), notamment bi ou polymétallique, composé d'au moins un premier composant (1), notamment constitué de métal, et d'au moins un deuxième composant (2), notamment constitué de métal ;
- pour lequel au moins le premier composant (1) du système composite est constitué en tant que pièce formée composite, laquelle est constituée au moins de deux matériaux, notamment deux métaux, qui se distinguent l'un de l'autre concernant au moins une propriété physique et/ou chimique, notamment une densité de matériau, une température de fusion, un coefficient de dilatation thermique et/ou concernant le module d'élasticité,
**caractérisé**
**en ce que** les au moins deux matériaux du premier composant (1) sont reliés entre eux au moins partiellement par liaison de matière, par l'intermédiaire d'une zone de diffusion constituée au moins par tronçons à l'intérieur du premier composant (1).

2. Capteur selon la revendication 1,
- pour lequel chacun des au moins deux matériaux différents l'un de l'autre du premier composant (1) constituent chacun au moins 1 %, notamment chacun plus de 10 %, de son volume ; et/ou
- pour lequel le premier composant (1) est structuré en couches avec les aux moins deux matériaux différents l'un de l'autre, et pour lequel chacun des deux matériaux présente une épaisseur de couche d'au moins 1 mm ; et/ou
- pour lequel un degré de porosité du composant composite est choisi inférieur à 10 %, notamment nettement inférieur à 5 % ; et/ou
- pour lequel au minimum l'un des au moins deux matériaux du premier composant (1) est pour l'essentiel identique, concernant au moins une propriété physique et/ou chimique, au matériau du deuxième composant (2) ; et/ou
- pour lequel les deux composants (1, 2) du système composite sont reliés entre eux par une liaison mécanique ferme en formant partiellement une liaison par friction et/ou une liaison de forme ; et/ou
- pour lequel au moins le premier composant (1) du système composite est constitué au moins partiellement d'un matériau fritté.

3. Capteur selon l'une des revendications précédentes, pour lequel au moins le premier composant (1) est fabriqué au moins partiellement au moyen d'un pressage à chaud, notamment réalisé à une pression de travail élevée, supérieure à 800 bar et/ou une température de travail élevée, supérieure à 700 °C.

4. Capteur selon la revendication précédente, pour lequel le premier composant (1) est fabriqué au moyen d'un pressage à chaud isostatique.

5. Capteur selon l'une des revendications précédentes, pour lequel au moins le premier composant (1) est constitué partiellement d'un matériau moulé, et/ou laminé et/ou étiré.

6. Capteur selon l'une des revendications précédentes, pour lequel au moins l'un des composants (1, 2) est constitué au moins partiellement d'un métal.

7. Capteur selon l'une des revendications précédentes, pour lequel aussi bien le premier composant que le deuxième composant sont chacun constitués au moins partiellement de métal.

8. Capteur selon l'une des revendications précédentes,
- pour lequel au moins l'un des composants est constitué au moins partiellement d'acier, notamment d'inox ; et/ou
- pour lequel au moins l'un des composants est constitué au moins partiellement de titane, notamment d'un alliage de titane ; et/ou
- pour lequel au moins l'un des composants est constitué au moins partiellement de tantale, notamment d'un alliage de tantale ; et/ou
- pour lequel au moins l'un des composants est constitué au moins partiellement de zirconium, notamment d'un alliage de zirconium; et/ou
- pour lequel il s'agit, pour chacun des au moins deux matériaux du premier composant (1), de métal ; et/ou
- pour lequel le premier composant (1) est constitué au moins partiellement d'acier et au moins partiellement de titane et/ou de zirconium et/ou de tantale.

9. Capteur selon l'une des revendications précédentes, pour lequel les deux composants (1, 2) du système composite sont reliés entre eux, au moins par tronçons, par une liaison de matière, notamment au moyen d'une liaison brasée ou soudée.

10. Capteur selon la revendication 9, pour lequel les deux composants (1, 2) du système composite sont reliés entre eux au moins partiellement par l'intermédiaire d'une zone de diffusion.

11. Capteur selon la revendication précédente, pour lequel le premier composant (1) est fritté directement sur le deuxième composant (2) en formant la zone de diffusion.

12. Capteur selon l'une des revendications précédentes,
- pour lequel les deux composants (1, 2) du système composite sont reliés entre eux au moins partiellement par une liaison adhésive, notamment au moyen d'une matière plastique ; et/ou
- pour lequel l'un des deux composants du système composite s'étend au moins partiellement à travers l'autre composant (1) le long d'un axe longitudinal imaginaire (L) du système composite ; et/ou
- pour lequel l'un des au moins deux composants (1, 2) du système composite entoure l'autre des au moins deux composants (1, 2), au moins par tronçons et au moins partiellement.

13. Capteur selon l'une des revendications précédentes, pour lequel l'un des au moins deux composants (1, 2) du système composite est en contact, par une surface extérieure, notamment une surface cylindrique, au moins partiellement bombée, avec une surface intérieure de l'autre des au moins deux composants (1, 2) du système composite.

14. Capteur selon la revendication 13,
- pour lequel la surface intérieure est formée par une paroi intérieure d'un alésage s'étendant au moins dans une zone partielle de chaque composant (1, 2) ; et/ou
- pour lequel les deux composants (1, 2) du système composite forment au moins en partie un joint à ajustement serré, notamment agissant dans la direction de l'axe longitudinal et/ou dans une direction circonférentielle de la surface extérieure du deuxième composant (2) ; et/ou
- pour lequel des forces de serrage, notamment des forces normales orientées radialement le long de l'axe longitudinal, agissent sur les surfaces actives du système composite formées par les surfaces en contact réciproque des deux composants (1, 2) du système composite, de telle sorte qu'au moins l'un des deux composants (1, 2) du système composite est soumis au moins partiellement à une déformation élastique durable, notamment à une déformation mixte élastique-plastique.

15. Capteur selon l'une des revendications précédentes,
- pour lequel au minimum l'un des composants (1, 2) est soumis au moins partiellement à des déformations élastiques durables, notamment des déformations mixtes plastiques-élastiques, et/ou
- pour lequel l'un des composants (1, 2) du système composite est conçu de façon annulaire ; et/ou
- pour lequel l'un des composants (1, 2) du système composite est conçu en forme de douille ; et/ou
- pour lequel l'un des composants (1, 2) du système composite est conçu de façon tubulaire, notamment sous la forme d'un tube cylindrique circulaire, au moins par tronçons droit.

16. Capteur selon l'une des revendications précédentes, pour lequel le système composite comprend en outre un troisième composant (3), qui est fixé sur le premier composant (1) et/ou sur le deuxième composant (2).

17. Capteur selon la revendication précédente 16,
- pour lequel le premier composant (1) est relié aussi bien avec le deuxième composant (2) qu'avec le troisième composant (3) respectivement au moins partiellement par une liaison de matière ; et/ou
- pour lequel le troisième composant (3) est constitué d'un matériau qui se distingue du matériau du deuxième composant (2), concernant au moins une propriété physique et/ou chimique, notamment une température de fusion, un coefficient de dilatation thermique et/ou concernant le module d'élasticité ; et/ou
- pour lequel le troisième composant (3) est disposé à distance du premier composant (1) et/ou est conçu pour l'essentiel de manière identique au premier composant (1).

18. Capteur selon l'une des revendications précédentes, pour lequel l'un des composants (1, 2) du système composite est conçu en tant que tube de mesure du capteur, servant à guider le produit à mesurer, vibrant pendant le fonctionnement du capteur, notamment décrivant au moins temporairement des vibrations de flexion autour d'un axe de vibration s'étendant en direction de l'axe longitudinal du système composite et/ou coïncidant avec l'axe longitudinal du système composite.

19. Capteur selon la revendication 18, pour lequel le premier composant (1) est conçu en tant que tube de mesure et pour lequel le deuxième composant (2) est conçu en tant que corps métallique, notamment en forme de plaque ou de disque, fixé sur le tube de mesure

20. Capteur selon la revendication 18, pour lequel le deuxième composant (2) est formé en tant que tube de mesure et pour lequel le premier composant (1) est conçu en tant que corps métallique, notamment en forme de plaque ou de disque, fixé sur le tube de mesure.

21. Capteur selon l'une des revendications 16 à 18, pour lequel l'un des composants (1, 2) du système composite est conçu en tant que tube de mesure du capteur, servant à guider le produit à mesurer, vibrant pendant le fonctionnement du capteur, notamment décrivant au moins temporairement des vibrations de flexion autour d'un axe de vibration s'étendant en direction de l'axe longitudinal du système composite et/ou coïncidant avec l'axe longitudinal du système composite, et pour lequel le troisième composant (3) est conçu en tant qu'élément support fixé de façon apte à vibrer sur le tube de mesure et/ou supportant le tube de mesure de façon apte à vibrer.

22. Capteur selon la revendication 21, pour lequel le troisième composant (3) est conçu en tant que boîtier de capteur entourant le tube de mesure.

23. Capteur selon la revendication 21, pour lequel le troisième composant (3) est composé en tant que contre-vibrateur entourant le tube de mesure, notamment cylindrique et aligné pour l'essentiel de façon coaxiale par rapport au tube de mesure.

24. Capteur selon l'une des revendications 18 à 23, pour lequel au moins l'un des composants (1, 2, 3) du système composite est conçu sous la forme d'une bride de capteur fixée à une extrémité du tube de mesure, servant au raccordement d'une tuyauterie, conçue en tant que conduite, au tube de mesure.
